# EUROPEAN PATENT SPECIFICATION

(11) **EP 4 370 576 B1**
(45) Date of publication and mention of the grant of the patent: **19.02.2025**
(21) Application number: 22744449.4
(22) Date of filing: 06.07.2022
(51) Int. Cl.: C08G 59/17, C08G 59/22, C08G 59/38, C08G 59/50, C09J 163/00

(54) **EPOXIDE-ACRYLATE HYBRID MOLECULES AND THEIR USE FOR CHEMICAL ANCHORING**
EPOXID-ACRYLAT-HYBRIDMOLEKÜLE UND IHRE VERWENDUNG ZUR CHEMISCHEN VERANKERUNG
MOLÉCULES HYBRIDES ÉPOXYDE-ACRYLATE ET LEUR UTILISATION POUR L'ANCRAGE CHIMIQUE

(30) Priority: 16.07.2021 EP 21185984
(43) Date of publication of application: 22.05.2024
(73) Proprietor: Hilti Aktiengesellschaft, 9494 Schaan (LI)
(72) Inventor: MARTIN-LASANTA, Ana-Maria, 35398 Gießen (DE); PESCHKE, Ursula, 85617 Aßling (DE); BORNSCHLEGL, Alexander, 81245 München (DE); NICKERL, Georg, 86911 Dießen am Ammersee (DE); GNASS, Beate, 86368 Gersthofen (DE)
(74) Representative: Hilti Aktiengesellschaft Corporate Intellectual Property
(86) International application number: PCT/EP2022/068671
(87) International publication number: WO 2023/285221

(56) References cited:
- WO-A1-2014/079856
- WO-A1-2017/119406
- WO-A1-2019/065075
- JP-A- 2004 323 741
- JP-A- 2014 058 618
- JP-A- S62 229 549

## Description

The present invention relates to epoxide-acrylate hybrid molecules, and their use in the resin component of a multi-component reactive resin composition for chemical anchoring. Furthermore, the invention relates to a multi-component reactive resin composition comprising these epoxide-acrylate hybrid molecules, and to the use of such a multi-component reactive resin composition for chemical anchoring.

### State of the art

Epoxy resin mixtures for multi-component reactive resin compositions typically comprise comparatively highly viscous reactive resins, which are adjusted to a suitable viscosity by using reactive diluents. This is essential, as the press-out forces of multi-component reactive resin compositions for chemical anchoring are too high for smooth processability, particularly at low application temperatures, when using the highly viscous reactive resins alone.

In most cases bisphenol A- or bisphenol F-based epoxy resins (BPA/BPF resins) are used as highly viscous reactive resins. Typical reactive diluents are glycidyl-based reactive diluents, such as trimethylolpropane triglycidyl ether (TMPTGE), 1,6-hexanediol diglycidyl ether (HDDGE), 1,4-butanediol diglycidyl ether (BDDGE) or neopentyl glycidyl ether.

However, the use of some glycidyl-based reactive diluents, such as TMPTGE, is disadvantageous, mainly due to the fact that these substances have corrosive and often also CMR properties (carcinogenic, mutagenic, toxic for reproduction).

It is known that temperature affects the performance of chemical anchoring mortars, as for example described in Cook, R. A., Konz, R. C., "Factors Influencing Bond Strength of Adhesive Anchors", ACI Structural Journal, 2001, 98, 76-86 and Moussa, O., Vassilopoulos, A.P., de Castro, J., Keller, T., "Early-age tensile properties of structural epoxy adhesives subjected to low-temperature curing" Int. J. Adhes. Adhes. 2012, 35, 9-16. The application or installation of chemical anchoring mortars is performed indoors or outdoors and also during winter times what usually means low application or installation temperatures. Low application or installation temperatures at the job site significantly slow down the curing speed and therefore prolong the time period until the final state of the mechanical properties is achieved. In general, multi-component reactive resin compositions show relatively long curing times at low temperatures (below about 5 °C), when using epoxy resins and glycidyl-based reactive diluents, such as TMPTGE.

Accelerating the curing times is reasonable in order to shorten the waiting time before carrying out the next step at the job site.

Therefore, multi-component reactive resin compositions that cure faster at low temperatures, thus, reduce the time period until the final state of their mechanical properties is achieved, are desired for chemical anchoring applications.

Some approaches have already been made to combine epoxy compounds with acrylates in the field of adhesives and coatings. For example, as described in EP 1431365 A1, a mixture of at least one acrylic monomer and at least one epoxy monomer can be used to formulate adhesives.

Furthermore, in EP 2366738 A1, a curing adhesive composition for anchoring in or to concrete is described that contains a curable epoxy resin and a reactive multifunctional acrylate.

Additionally, according to the material safety data sheet from the commercial product Spit Epcon C8 from the company ITW (Illinois Tool Works Inc), an acrylate is used in the epoxy resin component (A) of this two-component epoxy resin composition.

However, all these examples are based on mixtures of epoxy monomers and acrylate monomers. As acrylates tend to hydrolyze under basic conditions, as described in Mallik K.L., Das M.N., Naturwissenschaften 51, 37 (1964), those mixtures have the disadvantage, that the resulting cured compositions show low stability under basic conditions. Such basic conditions may e.g. occur or develop, when chemical anchoring is performed in or to substrates containing calcium oxide such as concrete or plaster. Concrete e.g. is characterized in having a surface pH value of 13.5 as described in Müller, B. et al. RILEM Technical Letters (2018) 3, 39-45.

Epoxy-acrylate hybrid molecules are known from WO 2019/065075 A1 (epoxy-acrylate hybrid molecules comprising a polyol backbone and bearing at least one epoxy group and at least one acrylate group), JP S62-229549 A (epoxide-acrylate hybrid molecule based on a sugar alcohol as the polyol and comprises two acrylate groups and two epoxy groups), WO 2017/119406 A1 (epoxy-acrylate hybrid molecule with bisphenol S and glycerol as well as, in one of the cases, ethylene glycol in its polyol backbone), JP 2014058618 A (monoacrylate of BADGE, an epoxide-acrylate hybrid molecule), and JP 2004323741 A. These documents, however, are directed to different technical fields other than chemically fastening purposes, like a photopolymerizable composition capable of forming a hard coat layer (WO 2019/065075 A1), optical information recording medium (JP S62-229549 A2), sealants for liquid crystal display element (WO 2017/119406 A1), sealant for light receiving element (JP 2014058618 A2), and coatings (JP 2004323741 A2).

WO 2014/079856 A1 discloses epoxy-acrylate hybrid molecules and their use in chemical anchoring applications.

Therefore, overall, there is a general desire for improvement of multi-component reactive resin compositions and cured mortars known in the art, in particular for use in chemical anchoring applications.

Therefore, in particular, multi-component reactive resin compositions which show faster curing at low temperatures, thus, reducing the time period until the final state of their mechanical properties is achieved, and cured mortars resulting from multi-component reactive resin compositions which show higher stability under basic conditions are desired for chemical anchoring applications.

### Problem underlying the invention

It is an object of the present invention to provide a multi-component reactive resin composition which overcomes drawbacks of the prior art at least partially and preferably entirely.

In detail; it is an object of the present invention to provide a multi-component reactive resin composition, which leads to a mortar which cures faster at low temperatures, thus, reduces the time period until the final state of its mechanical properties is achieved. It is still a further object of the present invention to provide a multi-component reactive resin composition, which leads to a cured mortar which shows higher stability under basic conditions.

### Disclosure of the invention

The problem of the present invention is solved by epoxide-acrylate hybrid monomers according to the invention. Surprisingly, it was found that the curing process of the epoxide-acrylate hybrid molecules according to the invention as pure resins with an amine hardener is accelerated in comparison to the curing process of the corresponding epoxidized polyols, in particular already at room temperature.

Furthermore, surprisingly, it was found that by using the epoxide-acrylate hybrid molecules according to the invention in the resin component of a multi-component reactive resin composition, the curing speed of multi-component reactive resin compositions is increased, especially at low temperatures. In particular, the increased curing speed is translated to a faster evolution of the bond strength or bond resistance measured in pull-out tests, especially when performed under critical curing conditions like low temperature curing.

Furthermore, surprisingly, it was found that cured mortars resulting from multi-component reactive resin compositions comprising the epoxide-acrylate hybrid molecules according to the invention show a similar stability under basic conditions in comparison to cured mortars resulting from multi-component reactive resin compositions comprising a state-of-the-art curable epoxy resin mixture in combination with a glycidyl-based reactive diluent. And, surprisingly, it was found that cured mortars resulting from multi-component reactive resin compositions comprising the epoxide-acrylate hybrid molecules according to the invention show even higher stability under basic conditions in comparison to cured mortars resulting from multi-component reactive resin compositions comprising a state-of-the-art curable epoxy resin mixture in combination with an acrylate reactive diluent.

In one embodiment, the present invention is thus related to epoxide-acrylate hybrid molecules comprising a polyol backbone and bearing at least one epoxy group and at least one acrylate group.

In a further embodiment, the present invention is thus related to the use of epoxide-acrylate hybrid molecules in an epoxy resin mixture.

In a further embodiment, the present invention is thus related to the use of epoxide-acrylate hybrid molecules in a multi-component reactive resin composition for chemical anchoring, in particular for chemically anchoring an element in or to a substrate.

In a further embodiment, the present invention is thus related to the use of epoxide-acrylate hybrid molecules in a multi-component reactive resin composition to improve stability under basic conditions.

In a further embodiment, the present invention is thus related to epoxy resin mixtures as well as epoxy resin components (A) as well as multi-component reactive resin compositions comprising epoxide-acrylate hybrid molecules.

In a further embodiment, the present invention is thus related to the use of multi-component reactive resin compositions comprising epoxide-acrylate hybrid molecules for chemical anchoring, in particular for chemically anchoring an element in or to a substrate.

Further embodiments of the present invention are described in the detailed description below and in the dependent patent claims.

### Detailed description of the present invention

Within the context of the present invention, the terms used above and in the following description have the following meanings:
"*Acrylic acids*" are organic compounds, in particular unsaturated carboxylic acids, comprising a vinyl group connected directly to a carboxylic acid terminus. In the context of the present invention, the expression "*acrylic acid*" preferably denotes acrylic acid (prop-2-enoic acid) and methacrylic acid (2-methylprop-2-enoic acid).

"*Aliphatic compounds*" are acyclic or cyclic, saturated or unsaturated carbon compounds, excluding aromatic compounds.

"*Cycloaliphatic compounds*" *or*"*alicyclic compounds*" are compounds having a carbocyclic ring structure, excluding benzene derivatives or other aromatic systems.

"*Araliphatic compounds*" are aliphatic compounds having an aromatic backbone such that, in the case of a functionalized araliphatic compound, a functional group that is present is bonded to the aliphatic rather than the aromatic part of the compound.

"*Aromatic compounds*" are compounds which follow Hückel's rule (4n+2).

"*Amines*" are compounds which are derived from ammonia by replacing one, two or three hydrogen atoms with hydrocarbon groups, and have the general structures RNH₂ (primary amines), R₂NH (secondary amines) and R₃N (tertiary amines) (see: IUPAC Chemical Terminology, 2nd ed. (the "Gold Book"), compiled by A.D. McNaught and A. Wilkinson, Blackwell Scientific Publications, Oxford (1997)).

"*Epoxides*" are cyclic ethers with three ring atoms. The expression "*epoxide*" also denotes an epoxide functional group, also called oxirane group or epoxy group. Such an epoxy group is shown below:

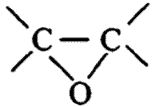

In the context of the present invention the expression "*epoxide*" preferably denotes ethylene oxide having the chemical formula C₂H₄O.

"*Epoxidized polyols*" are organic compounds comprising a polyol backbone and bearing at least two epoxide functional groups. Such compounds may also be called polyol glycidyl ethers. In detail, at least two of the hydroxyl groups of a polyol are modified to ether functional groups bearing epoxide functional groups, such as glycidyl groups. Specific examples are trimethylolethane triglycidyl ether, trimethylolpropane triglycidyl ether, pentaerythritol glycidyl ether, and sorbitol polyglycidyl ether. These compounds are known to a skilled person and commercially available.

"*Polyols*" are organic compounds containing multiple hydroxyl groups. In the context of the present invention, polyols do not contain any other functional groups.

"*Salts*" are compounds composed of positively charged ions (cations) and negatively charged ions (anions). Ionic bonds are present between these ions. For example, the expression "*salts of nitric acid*" describes compounds which are derived from nitric acid (HNO₃) and which comprise a nitrate (NO₃⁻) as an anion. The expression "*salts of nitrous acid*" describes compounds which are derived from nitrous acid (HNO₂) and which comprise a nitrite (NO₂⁻) as an anion. The expression "*salts of halogens*" describes compounds which comprise an element from group 7 of the periodic table as an anion. In particular, the expression "*salts of halogens*" should be understood to mean compounds which comprise a fluoride (F⁻), chloride (Cl⁻), bromide (Br) or iodide (I⁻) as an anion. The expression "*salts of trifluoromethanesulfonic acid*" describes compounds which are derived from trifluoromethanesulfonic acid (CF₃SO₃H) and which comprise a triflate (CF₃SO₃⁻) as an anion. In the context of the present invention, the term "*salt*" also covers the corresponding hydrates of the salts. The salts used as accelerators are also referred to as "*salts*" in the context of the present invention.

The terms "*a*" or "*an*" as articles preceding a chemical compound class mean that one or more compounds falling under that chemical compound class may be meant. In a preferred embodiment, these articles mean only a single compound.

The term "*at least one*" means numerically "*one or more*". In a preferred embodiment, the term numerically means "*one*".

The terms "*including*", "*containing*" and "*comprising*" mean that there may be other components in addition to those mentioned. These terms are meant inclusively and therefore include "*consisting of*". "*Consisting of*" is meant conclusively and means that no further constituents may be present. In an embodiment, the terms "*comprise*" or "*comprising*" mean "*consist of*" or "*consisting of*"*.*

A range delimited by numbers, e.g. "from 80°C to 120°C" means that the two corner values and each value within that range are individually disclosed.

### Epoxide-acrylate hybrid molecules

As described above, in one embodiment, the present invention is related to epoxide-acrylate hybrid molecules comprising a polyol backbone and bearing at least one epoxy group and at least one acrylate group.

Surprisingly, it was found that the curing process of the epoxide-acrylate hybrid molecules according to the invention as pure resins with an amine hardener is accelerated in comparison to the curing process of the corresponding epoxidized polyols, in particular already at room temperature.

In general, epoxide-acrylate hybrid molecules according to the invention are based on epoxidized polyols wherein at least one of the at least two epoxy groups of the epoxidized polyol is chemically converted to an acrylate group. An acrylate group may be obtained by a ring opening reaction of an epoxy group with (meth)acrylic acid. This reaction leads to the formation of an acrylate or methacrylate group with a vicinal hydroxy group. Epoxide-acrylate hybrid molecules are formed by using sub-stoichiometric amounts of (meth)acrylic acid.

This process for the preparation of an epoxide-acrylate hybrid molecule according to the invention is a conventional reaction and known to a person skilled in the art. WO 2014/079856 A1 describes the reaction of an organic compound bearing epoxy groups with (meth)acrylic acid, the content of which is hereby incorporated in the present application.

As mentioned above, epoxide-acrylate hybrid molecules according to the invention comprise a polyol backbone and bear at least one epoxy group and at least one acrylate group.

According to the invention the epoxide-acrylate hybrid molecules are selected from the group consisting of 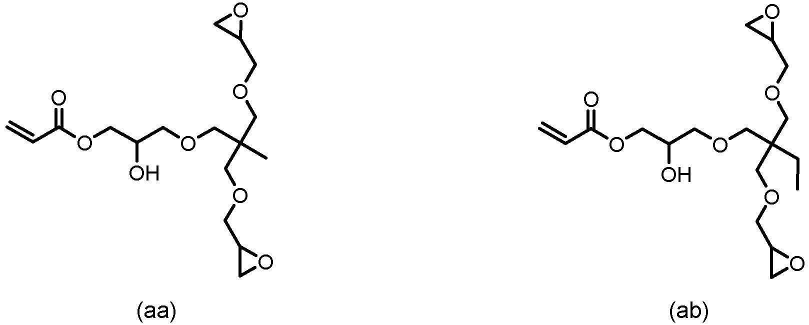 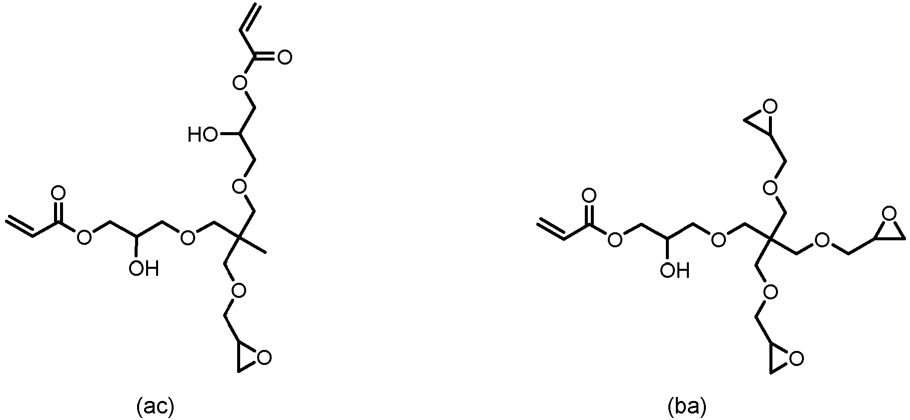 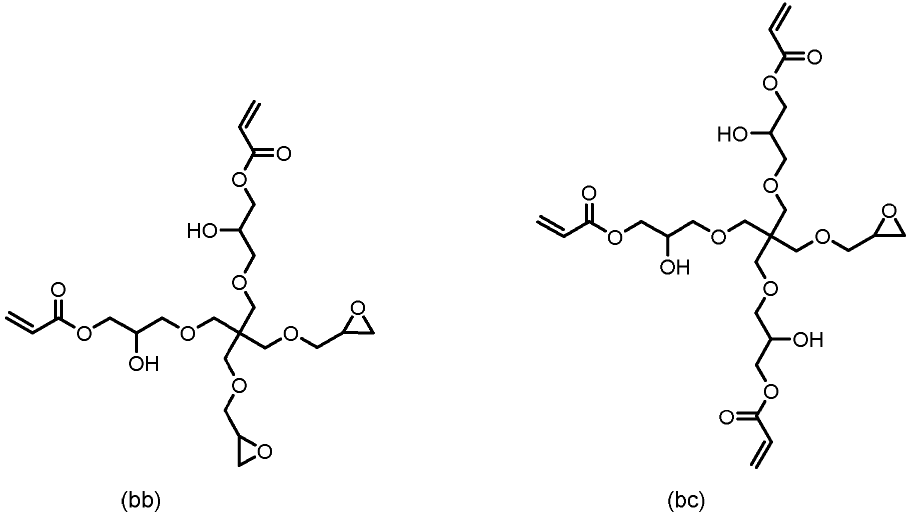 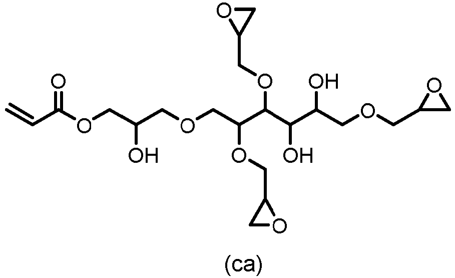 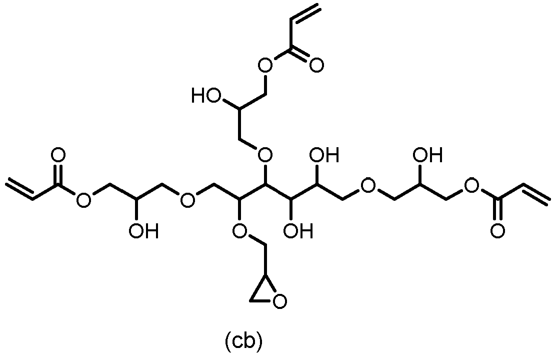 and all constitutional isomers to formulas (ca) and (cb).

Subject of the present invention is also the use of epoxide-acrylate hybrid molecules as described above in an epoxy resin mixture.

A further subject of the present invention is the use of epoxide-acrylate hybrid molecules as described above in multi-component reactive resin compositions for chemical anchoring, in particular for chemically anchoring an element in or to a substrate.

Surprisingly, it was found that by using epoxide-acrylate hybrid monomers as described above in an epoxy resin mixture as well as in the resin component of a multi-component reactive resin composition, the curing speed of multi-component reactive resin compositions is increased, especially at low temperatures. In particular, the increased curing speed is translated to a faster evolution of the bond strength or bond resistance measured in pull-out tests, especially when performed under critical curing conditions like low temperature curing.

A still further subject of the present invention is the use of epoxide-acrylate hybrid molecules as described above in multi-component reactive resin compositions to improve stability under basic conditions.

As mentioned above, surprisingly, it was found that cured mortars resulting from multi-component reactive resin compositions comprising epoxide-acrylate hybrid molecules as described above show a similar stability under basic conditions in comparison to cured mortars resulting from multi-component reactive resin compositions comprising a state-of-the-art curable epoxy resin mixture in combination with a glycidyl-based reactive diluent. And, surprisingly, it was found that cured mortars resulting from multi-component reactive resin compositions comprising the epoxide-acrylate hybrid molecules as described above show even higher stability under basic conditions in comparison to cured mortars resulting from multi-component reactive resin compositions comprising a state-of-the-art curable epoxy resin mixture in combination with an acrylate reactive diluent.

### Epoxy resin mixture

The present invention further relates to an epoxy resin mixture which comprises at least one curable epoxy resin and at least one epoxide-acrylate hybrid molecule as described above.

A large number of compounds which contain on average more than one epoxide group, preferably two epoxide groups, per molecule can be used as a curable epoxy resin in the epoxy resin mixture. They are known to a person skilled in the art and commercially available for this purpose. These curable epoxy resins may be both saturated and unsaturated as well as aliphatic, alicyclic, aromatic or heterocyclic, and may also have hydroxyl groups. They may also contain substituents which do not cause disruptive secondary reactions under the mixing or reaction conditions, for example alkyl or aryl substituents, ether groups, and the like. Trimeric and tetrameric epoxides are also suitable in the context of the present invention.

The epoxy resins are preferably glycidyl ethers which are derived from polyhydric alcohols, in particular from polyhydric phenols such as bisphenols and novolacs, in particular those having an average glycidyl group functionality of 1.5 or greater, in particular 2 or greater, for example from 2 to 10.

The epoxy resins may have an epoxy equivalent weight (EEW) of from 120 to 2000 g/EQ, preferably from 140 to 400 g/EQ. Mixtures of a plurality of epoxy resins may also be used.

The EEW (epoxide equivalent weight) values are usually indicated on the starting materials by the manufacturers or they are determined or calculated according to known methods. They indicate the amount in g of resin containing 1 mole of epoxy groups: EEW = MW / functionality.

Examples of polyhydric phenols used to prepare epoxy resins are resorcinol, hydroquinone, 2,2-bis-(4-hydroxyphenyl)propane (bisphenol A), mixtures of isomers of dihydroxyphenylmethane (bisphenol F), tetrabromo bisphenol A, novolac types, 4,4'-dihydroxyphenylcyclohexane and 4,4'-dihydroxy-3,3'- dimethyldiphenylpropane.

Epoxy resins useful in the present invention include, without limiting the scope of the invention, diglycidyl ethers of bisphenol A and F, and aliphatic and cycloaliphatic epoxides. Further examples include hexanediol diglycidyl ethers, trimethylolpropane triglycidyl ethers, bisphenol A epichlorohydrin resins, and/or bisphenol F epichlorohydrin resins, for example, having an average molecular weight of MW ≤ 2000 g/mol.

Most preferably, the epoxy resin is a diglycidyl ether of bisphenol A or bisphenol F or a mixture thereof. Liquid diglycidyl ethers based on bisphenol A and/or F having an EEW of from 150 to 300 g/EQ are particularly preferably used.

The proportion of epoxy resin in the epoxy resin mixture is >0 to 70 wt.%, preferably 10 to 65 wt.%, and particularly preferably 30 to 60 wt.%, based on the total weight of the epoxy resin mixture.

Besides the epoxy resin, the epoxy resin mixture comprises epoxide-acrylate hybrid molecules as described above. These are preferably present in an amount of from 5 to 25 wt.%, particularly from 5 to 15 wt.%, based on the total weight of the epoxy resin mixture.

The epoxy resin mixture may optionally comprise at least one or more reactive diluents. Glycidyl ethers of aliphatic, alicyclic or aromatic monoalcohols or in particular polyalcohols having a lower viscosity than epoxides containing aromatic groups may be used as reactive diluents. Examples of reactive diluents are monoglycidyl ethers, such as o-cresyl glycidyl ethers, dodecyl glycidyl ether or tetradecyl glycidyl ether, and glycidyl ethers having an epoxide functionality of at least 2, such as 1,4-butanediol diglycidyl ether (BDDGE), cyclohexanedimethanol diglycidyl ether, and hexanediol diglycidyl ether, resorcinol diglycidyl ether, neopentyl glycol diglycidyl ether, butadiene dioxide, divinylbenzene dioxide, diglycidyl ether, vinyl cyclohexene dioxide, diethylene glycol diglycidyl ether, as well as tri- or higher glycidyl ethers, such as glycerol triglycidyl ether, pentaerythritol tetraglycidyl ether, trimethylolpropane triglycidyl ether (TMPTGE) or trimethylolethane triglycidyl ether (TMETGE), with trimethylolethane triglycidyl ether being preferred. Mixtures of two or more of these reactive diluents may also be used, preferably mixtures containing triglycidyl ethers, particularly preferably as a mixture of 1,4-butanediol diglycidyl ether (BDDGE) and trimethylolpropane triglycidyl ether (TMPTGE) or 1,4-butanediol diglycidyl ether (BDDGE) and trimethylolethane triglycidyl ether (TMETGE).

The reactive diluents are preferably present in an amount of from 0 to 40 wt.%, particularly from 1 to 20 wt.%, based on the total weight of the epoxy resin mixture.

Suitable epoxy resins and reactive diluents can also be found in the standard reference from Michael Dornbusch, Ulrich Christ and Rob Rasing, "Epoxidharze", Vincentz Network GmbH & Co. KG (2015), ISBN 13: 9783866308770. These compounds are included herein by reference.

Furthermore, the epoxy resin mixture may contain at least one or more organic additives, in particular adhesion promoters.

By using an adhesion promoter, the crosslinking of the borehole wall with the mortar composition is improved such that the adhesion increases in the cured state.

Suitable adhesion promoters are selected from the group of silanes that are functionalized with further reactive organic groups, such as 3-glycidoxypropyltrimethoxysilane, 3-glycidoxypropyltriethoxysilane, 2-(3,4-epoxycyclohexyl)ethyltrimethoxysilane, N-2-(aminoethyl)-3-aminopropylmethyl-diethoxysilane, N-2-(aminoethyl)-3-aminopropyl-triethoxysilane, 3-aminopropyl-trimethoxysilane, 3-aminopropyltriethoxysilane, N-phenyl-3-aminoethyl-3-aminopropyl-trimethoxysilane, 3-mercaptopropyltrimethoxysilane, and 3-mercaptopropylmethyldimethoxysilane. In particular, 3-aminopropyl-trimethoxysilane (AMMO), 3-aminopropyltriethoxysilane (AMEO), 2-aminoethyl-3-aminopropyl-trimethoxysilane (DAMO), and trimethoxysilylpropyldiethylenetetramine (TRIAMO) are preferred adhesion promoters. Further silanes are described, for example, in EP 3000792 A1, the content of which is hereby incorporated in the present application.

The adhesion promoter may be contained in an amount of up to 10 wt.%, preferably from 0.1 to 5 wt.%, particularly preferably from 1.0 to 5.0 wt.%, based on the total weight of the epoxy resin mixture.

### Epoxy resin component (A)

The present invention further relates to an epoxy resin component (A) which comprises an epoxy resin mixture as described above and which further comprises (inorganic) fillers and conventional inorganic additives, such as thickeners as described below.

Fillers are in principle known in the art and may be selected from the group consisting of coarse fillers, fine fillers, and combinations thereof. The fillers may be selected from oxides of silicon and aluminum, or mixed oxides in the presence of further cations. Oxides of silicon or aluminum are primarily silicon dioxide (SiO₂) or aluminum oxide (Al₂O₃). Mixed oxides, if present, are primarily oxides of silicon and aluminum in the additional presence of one or more oxides selected from oxides of the group of metals consisting particularly of calcium, titanium, iron, sodium, and the like. Preferably, the filler is selected from quartz, silicates, or alumina, in particular α-alumina. Such fillers are commercially available.

Preferred inorganic fillers may be selected from the group consisting of cements such as Portland cement or aluminate cement and other hydraulically setting inorganic substances, quartz, glass, corundum, porcelain, earthenware, barite, light spar, gypsum, talc and/or chalk, and mixtures thereof. Particularly suitable fillers are quartz powders, fine quartz powders, and ultra-fine quartz powders that have not been surface-treated, such as Millisil^{®} W3, Millisil^{®} W6, Millisil^{®} W8, and Millisil^{®} W12, preferably Millisil^{®} W12. In addition, thickeners such as fumed silica may also be used as an inorganic filler.

The fillers, in particular the fine fillers, may optionally be functionalized. For example, the fine fillers may be modified, i.e. surface modified, with a silane containing at least one Si-bonded hydrolyzable group. Suitable silanes for surface modification include but are not limited to, for example, 3-(meth)acryloyl-oxypropyltrialkoxysilane, 3-(meth)acryloyl-oxymethyltrialkoxysilane, 3-(meth)acryloyl-oxypropylmethyldialkoxysilane, 3-glycidyloxypropyltrialkoxysilane, glycidyloxymethyltrialkoxysilane, 3-glycidyloxypropylmethyldi-alkoxysilane, 2-(3,4-epoxycyclohexyl)ethyltrimethoxysilane, N-2-(aminoethyl)-3-aminopropylmethyl-diethoxysilane, N-2-(aminoethyl)-3-aminopropyl-triethoxysilane, 3-aminopropyl-trialkoxysilane, N-phenyl-3-aminoethyl-3-aminopropyl-trialkoxysilane, 2-aminoethyl-3-aminopropyl-trialkoxysilane, bis-(3-trialkoxysilylpropyl)amine, 3-mercaptopropyltrialkoxysilane, 3-mercaptopropylmethyldialkoxysilane, alkenylalkoxysilane, trialkoxysilylpropyldiethylenetetramine and/or tetraalkoxysilane, or a mixture of two or more thereof.

Preferred silanes are those having reactive groups, such as epoxide groups or amino groups, and hydrolyzable groups bonded to Si, such as alkoxy (e.g. with 1 to 7 carbon atoms, such as methoxy or ethoxy) or halogeno, such as chloro. More preferably, the silane is selected from 3-glycidyloxypropyltrialkoxysilane, such as 3-glycidyloxypropyltrimethoxysilane (GLYMO) or 3-glycidyloxypropyltriethoxysilane, glycidyloxymethyltrialkoxysilane, such as glycidyloxymethyltrimethoxysilane or glycidyloxymethyltriethoxysilane, 3-glycidyloxypropylmethyldi-alkoxysilane, such as 3-glycidyloxypropylmethyldi-methoxysilane or 3-glycidyloxypropylmethyldi-ethoxysilane, 2-(3,4-epoxycyclohexyl)ethyltrimethoxysilane, N-2-(aminoethyl)-3-aminopropylmethyl-diethoxysilane, N-2-(aminoethyl)-3-aminopropyl-triethoxysilane, 3-aminopropyl-trialkoxysilane, such as 3-aminopropyl-trimethoxysilane (AMMO) or 3-aminopropyl-triethoxysilane (AMEO), N-phenyl-3-aminoethyl-3-aminopropyl-trialkoxysilane, such as N-phenyl-3-aminoethyl-3-aminopropyl-trimethoxysilane, 2-aminoethyl-3-aminopropyl-trialkoxysilane, such as 2-aminoethyl-3-aminopropyl-trimethoxysilane (DAMO), bis-(3-trialkoxysilylpropyl)amine, such as bis-(3-trimethoxysilylpropyl)amine or bis-(3-triethoxysilylpropyl)amine, trialkoxysilylpropyldiethylenetetramine, such as trimethoxysilylpropyldiethylenetetramine (TRIAMO) or triethoxysilylpropyldiethylenetetramine, and/or tetraalkoxysilane, such as tetramethoxysilane, tetraethoxysilane or tetrapropoxysilane, or a mixture of two or more thereof. Particularly preferred silanes are, for example, 3-aminopropyl-triethoxysilane or 3-glycidyloxypropyltrimethoxysilane, e.g. Dynasylan^{®} GLYMO from Evonik Industries, Germany.

Particularly preferred are silanized quartz powders, fine quartz powders, and ultra-fine quartz powders. These are commercially available, for example, from the SILBOND^{®} product series from the company Quarzwerke. The product series SILBONDO EST (modified with epoxysilane) and SILBOND^{®} AST (treated with aminosilane) may specifically be mentioned here. Furthermore, fillers based on aluminum oxide such as aluminum oxide ultra-fine fillers of the ASFP type from the company Denka, Japan (d₅₀ = 0.3 µm) or grades such as DAW or DAM with the type designations 45 (d₅₀ < 0.44 µm), 07 (d₅₀ > 8.4 µm), 05 (d₅₀ < 5.5 µm), and 03 (d₅₀ < 4.1 µm) may be used. Moreover, the surface-treated fine and ultra-fine fillers of the Aktisil AM type (treated with aminosilane, d₅₀ = 2.2 µm) and Aktisil EM (treated with epoxysilane, d₅₀ = 2.2 µm) from Hoffman Mineral may be used.

In general, the inorganic fillers may be added in the form of sands, powders, or molded bodies, preferably in the form of fibers or balls. A suitable selection of the fillers with regard to type and particle size distribution/(fiber) length may be used to control properties relevant to the application, such as rheological behavior, press-out forces, internal strength, tensile strength, pull-out forces and impact strength.

The proportion of fillers is preferably 0 to 75 wt.%, for example 10 to 75 wt.%, preferably 15 to 75 wt.%, and more preferably 20 to 70 wt.%, even more preferably 30 to 70 wt.%, based on the total weight of the epoxy resin component (A).

Further conceivable additives to the epoxy resin component (A) are thixotropic agents such as optionally organically post-treated fumed silica, bentonites, alkyl and methyl celluloses, and castor oil derivatives, plasticizers such as phthalic acid esters or sebacic acid esters, stabilizers, antistatic agents, thickeners, flexibilizers, curing catalysts, rheology aids, wetting agents, coloring additives such as dyes or pigments, for example for different coloring of components for improved control of their mixing, as well as wetting agents, phlegmatizers, dispersants, and other control agents for the reaction rate, or mixtures of two or more thereof.

### Multi-component reactive resin composition

Furthermore, the invention is related to a multi-component reactive resin composition, comprising an epoxy resin component (A) as described above and a component (B) comprising at least one hardener ("*hardener component (B)*").

In the context of the present invention, the hardener comprises at least one compound commonly used for epoxy curing (reaction partner in nucleophilic ring opening reactions) and acrylate curing (reaction partner in Michael reactions). The term "*hardener*" preferably means at least one compound customary for epoxy curing and acrylate curing with or without added fillers and/or further additives, such as water, thickeners and/or further additives, in other words, the complete hardener component. Common additives may be added, such as fillers, as already described above in connection with the epoxy resin component (A). The other additives of the hardener component (B) of the multi-component reactive resin composition according to the invention may be provided, for example, in a weight proportion totaling 0.01 to 70 wt.%, e.g. 1 to 40 wt.%, based on the hardener component (B).

Surprisingly, it was found that multi-component reactive resin compositions comprising epoxide-acrylate hybrid molecules as described above in the resin component, the curing speed of such multi-component reactive resin compositions is increased, especially at low temperatures. In particular, the increased curing speed is translated to a faster evolution of the bond strength or bond resistance measured in pull-out tests, especially when performed under critical curing conditions like low temperature curing.

Furthermore, surprisingly, it was found that cured mortars resulting from multi-component reactive resin compositions comprising epoxide-acrylate hybrid molecules as described above show a similar stability under basic conditions in comparison to cured mortars resulting from multi-component reactive resin compositions comprising a state-of-the-art curable epoxy resin mixture in combination with a glycidyl-based reactive diluent. And, surprisingly, it was found that cured mortars resulting from multi-component reactive resin compositions comprising the epoxide-acrylate hybrid molecules as described above show even higher stability under basic conditions in comparison to cured mortars resulting from multi-component reactive resin compositions comprising a state-of-the-art curable epoxy resin mixture in combination with an acrylate reactive diluent.

The compounds commonly used for epoxy curing (acting as reactants in polyaddition) are in particular those having two or more groups selected from amino, imino, and mercapto, for example corresponding amines, thiols, or aminothiols, or mixtures thereof, for example as mentioned in Lee H. and Neville K., "Handbook of Epoxy Resins" (New York: McGraw-Hill), 1982.

According to the invention, preferably one or more amines, more preferably polyamines, may be used as reactive hardener. Suitable amines used as hardener are, in particular, those customary for epoxy-amine systems and known to those skilled in the art, selected from aliphatic, alicyclic and aromatic amines, the amine having on average at least two reactive hydrogen atoms bonded to a nitrogen atom per molecule. This includes polyamines having at least two amino groups in the molecule.

Suitable amines, without limiting the scope of the invention, include: 1,2-diaminoethane (ethylene diamine), 1,2-propanediamine, 1,3-propanediamine, 1,4-diaminobutane, 2,2-dimethyl-1,3-propandiamine (neopentanediamine), diethylaminopropylamine (DEAPA), 2-methyl-1,5-diaminopentane, 1,3-diaminopentane, 2,2,4- or 2,4,4-trimethyl-1,6-diaminohexane (TMD) and mixtures thereof, 1-amino-3-aminomethyl-3,5,5-trimethylcyclohexane, 1,2-bis(aminomethyl) cyclohexane, 1,3-bis(aminomethyl) cyclohexane, hexamethylenediamine (HMD), 1,2- and 1,4-diaminocyclohexane (1,2-DACH und 1,4-DACH), bis(4-aminocyclohexyl)methane, bis(4-amino-3-methylcyclohexyl)methane, diethylenetriamine (DETA), 4-azaheptan-1,7-diamin, 1,11-diamino-3,6,9-trioxundecane, 1,8-diamino-3,6-dioxaoctane, 1,5-diamino-methyl-3-azapentane, 1,10-diamino-4,7-dioxadecane, bis(3-aminopropyl)amine, 1,13-diamino-4,7,10-trioxatridecane, 4-aminomethyl-1,8-diaminooctane, 2-butyl-2-ethyl-1,5-diaminopentane, N,N-bis-(3-aminopropyl)methylamine, N-(2-aminoethyl)piperazine, triethylenetetramine (TETA), tetraethylenepentamine (TEPA), pentaethylenehexamine (PEHA), bis(4-amino-3-methylcyclohexyl)methane, 1,3-benzenedimethanamine (m-xylylenediamine, mXDA), 1,4-benzenedimethanamine (p-xylylenediamine, pXDA), 5-(aminomethyl)bicyclo[[2.2.1]hept-2-yl]methylamine (NBDA, norbornandiamine), dimethyldipropylenetriamine, dimethylaminopropyl-aminopropylamine (DMAPAPA), 3-aminomethyl-3,5,5-trimethylcyclohexylamine (isophoronediamine (IPDA)), diaminodicyclohexylmethane (PACM), diethylmethylbenzoldiamine (DETDA), 4,4'-diaminodiphenylsulfone (Dapson), mixed polycyclic amines (MPCA) (for example Ancamine^{®} 2168), dimethyldiaminodicyclohexylmethane (Laromin^{®} C260), 2,2-bis(4-aminocyclohexyl)propane, 3(4),8(9)-bis(aminomethyl)tricyclo[5.2.1.0^{2,6}]decane (mixture of isomers, tricyclic primary amines; TCD-diamine), N,N'-diaminopropyl-2-methyl-cyclohexane-1,3-diamine, N,N'-diaminopropyl-4-methyl-cyclohexane-1,3-diamine, N-(3-aminopropyl)cyclohexylamine, and 2-(2,2,6,6-tetramethylpiperidin-4-yl)propane-1,3-diamine.

According to the invention, preferred polyamines are 2-methylpentanediamine (DYTEK A), 1-amino-3-aminomethyl-3,5,5-trimethylcyclohexane (IPD), 1,3-benzenedimethanamine (m-xylylenediamine, mXDA), 1,4-benzenedimethanamine (p-xylylenediamine, pXDA), 3-aminomethyl-3,5,5-trimethylcyclohexylamine (isophoronediamine (IPDA)), 1,6-diamino-2,2,4-trimethylhexane (TMD), diethylenetriamine (DETA), triethylenetetramine (TETA), tetraethylenepentamine (TEPA), pentaethylenehexamine (PEHA), N-ethylaminopiperazine (N-EAP), 3(4),8(9)-bis(aminomethyl)tricyclo[5.2.1.0^{2,6}]decane (mixture of isomers, tricyclic primary amines; TCD-diamine), 1,14-diamino-4,11-dioxatetradecane, dipropylenetriamine, 2-methyl-1,5-pentanediamine, N,N'-dicyclohexyl-1,6-hexanediamine, N,N'-dimethyl-1,3-diaminopropane, N,N'-diethyl-1,3-diaminopropane, N,N-dimethyl-1,3-diaminopropane, secondary polyoxypropylenediamines and triamines, 2,5-diamino-2,5-dimethylhexane, bis(amino-methyl)tricyclopentadiene, 1,8-diamino-p-menthane, bis-(4-amino-3,5-dimethylcyclohexyl)methane, 1,3-bis(aminomethyl)cyclohexane (1,3-BAC), dipentylamine, N-2-(aminoethyl)piperazine (N-AEP), N-3-(aminopropyl)piperazine, and piperazine.

Most preferably, the hardener is selected from the group consisting of m-xylylenediamine (sometimes also referred to as m-xylenediamine; IUPAC: [3-(aminomethyl)phenyl]methanamine), 1,3-bis(aminomethyl)cyclohexane (1,3-BAC), and 3-aminomethyl-3,5,5-trimethylcyclohexylamine (isophoronediamine (IPDA)).

The one or more epoxy-acrylate-reactive amines are preferably present in component (B) in an amount of 10 to 90 wt.-%, more preferably 30 to 60 wt.-%, based on the total weight of component (B).

Component (B) of the inventive multi-component reactive resin composition may further contain a salt as an accelerator. The salt may be at least one salt selected from the group consisting of salts of nitric acid, salts of nitrous acid, salts of halogens, salts of trifluoromethanesulfonic acid, and combinations thereof. Preferably, the salt is at least one salt selected from the group consisting of salts of nitric acid, salts of halogens, salts of trifluoromethanesulfonic acid, as well as combinations thereof. It has been found to be particularly preferred that the salt is selected from the group consisting of nitrates (NO₃⁻), iodides (I⁻), triflates (CF₃SO₃⁻), as well as combinations thereof.

Suitable salts of nitric acid are in particular alkali metal nitrates, alkaline earth metal nitrates, lanthanoid nitrates, aluminum nitrate, ammonium nitrate as well as mixtures thereof. Corresponding salts of nitric acid are commercially available. Preferably, alkali metal nitrates and/or alkaline earth metal nitrates are used as salts of nitric acid, such as Ca(NO₃)₂ or NaNO₃.

It is also possible to use as salt a solution of a salt in nitric acid such as a solution containing Ca(NO₃)₂/HNO₃. To prepare this solution, CaCO₃ is dissolved in HNO₃.

Suitable salts of nitrous acid are in particular alkali metal nitrites, alkaline earth metal nitrites, lanthanoid nitrites, aluminum nitrite, ammonium nitrite, and mixtures thereof. Corresponding salts of nitrous acid are commercially available. Preferably, alkali metal nitrites and/or alkaline earth metal nitrites are used as salts of nitrous acid, such as Ca(NOz)z.

Suitable salts of the halogens are in particular alkali metal halides, alkaline earth metal halides, lanthanide halides, aluminum halides, ammonium halides, and mixtures thereof. Corresponding salts of the halogens are commercially available. Preferably, the halogens are selected from the group consisting of chloride, bromide, iodide as well as mixtures thereof, whereby iodides in particular are preferably used.

Suitable salts of trifluoromethanesulfonic acid are in particular alkali metal triflates, alkaline earth metal triflates, lanthanide triflates, aluminum triflate, ammonium triflate as well as mixtures thereof. Corresponding salts of trifluoromethanesulfonic acid are commercially available. Preferably, alkali metal triflates and/or alkaline earth metal triflates are used as salts of the trifluoromethanesulfonic acid, such as Ca(CF₃SO₃)₂.

In principle, the cations of the salt may be organic, inorganic or a mixture thereof. Preferably, the cation of the salt is an inorganic cation.

As organic cations, for example, ammonium cations substituted with organic radicals, such as tetraethylammonium cations substituted with C₁-C₆ alkyl radicals, may be considered.

Preferably, cations selected from the group consisting of alkali metals, alkaline earth metals, lanthanides, aluminum, ammonium (NH₄⁺) as well as mixtures thereof, more preferably from the group consisting of alkali metals, alkaline earth metals, aluminum, ammonium as well as mixtures thereof and even more preferably from the group consisting of alkali metals, alkaline earth metals, aluminum as well as mixtures thereof are considered as inorganic cations of the salt. It is particularly preferred that the cation of the salt is selected from the group consisting of sodium, calcium, aluminum, ammonium, and mixtures thereof.

The salt may be included in component (B) in an amount of e.g. up to 12 wt.-%, such as up to 10 wt.-, preferably up to 8 wt.-%, based on the total weight of component (B).

Thus, the following compounds or components are particularly suitable as salt: Ca(NO₃)₂ (calcium nitrate, usually used as Ca(NO₃)₂ tetrahydrate), a mixture of Ca(NO₃)₂/HNO₃, KNO₃ (potassium nitrate), NaNO₃ (sodium nitrate), Mg(NO₃)₂ (magnesium nitrate, usually used as Mg(NO₃)₂ hexahydrate), Al(NO₃)₃ (aluminum nitrate, usually used as Al(NO₃)₃ nonahydrate), NH₄NO₃ (ammonium nitrate), Ca(NOz)z (calcium nitrite), NaCl (sodium chloride), NaBr (sodium bromide), Nal (sodium iodide), Ca(CF₃SO₃)₂ (calcium triflate), Mg(CF₃SO₃)₂ (magnesium triflate), Li(CF₃SO₃)₂ (lithium triflate).

Component (B) of the inventive multi-component reactive resin composition may comprise one or more salts. The salts may be used singly or in a mixture of two or more of the said salts.

To improve the solubility properties of the salt in hardener component (B), it may be provided that the salt is dissolved in a suitable solvent and used accordingly as a solution. Organic solvents such as methanol, ethanol, and glycerine are suitable for this purpose. However, water may also be used as solvent, if necessary, also in mixture with the aforementioned organic solvents. To prepare the corresponding salt solutions, the salt is added to the solvent and stirred, preferably until completely dissolved.

In addition, component (B) of the inventive multi-component reactive resin composition may optionally include co-accelerators used in combination with the above-mentioned salt.

Examples of suitable co-accelerators are in particular tris-2,4,6-dimethylaminomethylphenol, 2,4,6-tris(dimethylamino)phenol, and bis[(dimethylamino)methyl]phenol. A suitable co-accelerator mixture contains 2,4,6-tris(dimethylaminomethyl)phenol and bis(dimethylaminomethyl)phenol. Mixtures of this kind are commercially available, for example as Ancamine^{®} K54 (Evonik, Germany).

These co-accelerators are preferably contained in hardener component (B) in a weight proportion of from 0.001 to 5 wt.%, based on the total weight of the hardener component (B).

As an alternative, the co-accelerator may be a phenol derivative. The phenol derivative is preferably a polyphenol and selected from the group consisting of novolac resins, styrenated phenols, phenolic lipids, and combinations thereof.

Compounds of the following formula (I) are preferably used as polyphenols from the group of novolac resins: 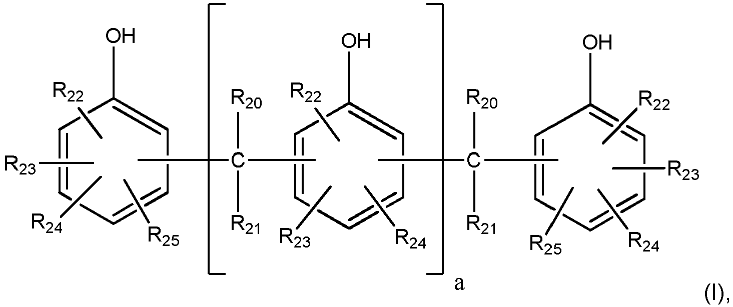 in which
R₂₀ and R₂₁ each denote, independently of one another, H or -CH₃;
R₂₂, R₂₃, R₂₄, and R₂₅ each denote, independently of one another, H, -CH₃ or an aliphatic functional group, preferably a linear, optionally partially unsaturated, unbranched hydrocarbon chain having up to 15 carbon atoms or an alkaryl functional group, preferably -C₈H₉; and where
a is 0 to 20, preferably 0 to 15.

The polyphenol from the group of novolac resins particularly preferably corresponds to the following formula (II): 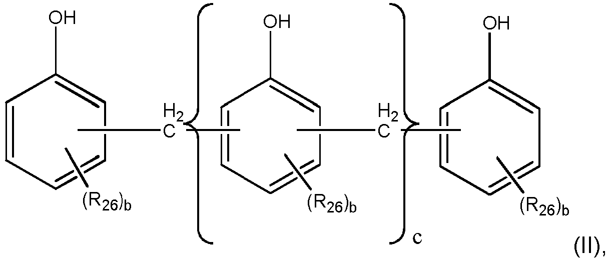 in which
R₂₆ denotes a C₁-C₁₅ alkyl group, preferably a methyl group or tert.-butyl group;
b is 0, 1 or 2, and is preferably 1; and
c is 0 to 15, and is preferably 0 to 6.

The novolac resin very particularly preferably corresponds to the above formula (II), in which R₂₆ denotes CH₃, and b is 1 or 2, or R₂₆ denotes tert.-butyl or a C₁-C₁₅ alkyl group, and b is 1, and where c is 0 to 15, preferably 1 to 15.

The term "*styrenated phenols*" is understood to mean the electrophilic substitution products of phenols (such as phenol, pyrocatechol, resorcinol, hydroquinone, hydroxyhydroquinone, phloroglucinol, pyrogallol, o-cresol, m-cresol or p-cresol, preferably phenol) with styrene or styrene analogs (such as vinyltoluene, vinylpyridine or divinylbenzene, preferably styrene). The styrenated phenol is particularly preferably selected from the reaction products of styrene and phenol which contain mixtures of compounds or individual compounds of the following formulae: 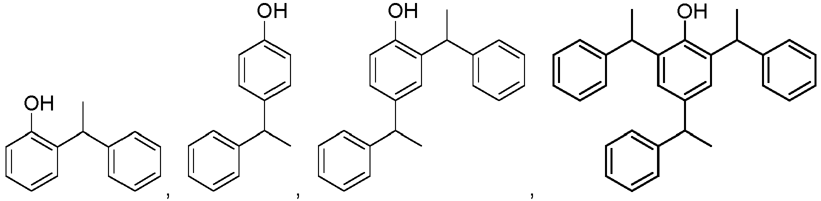 or 2,6-distyryl phenol, such as oligo- and polystyrene compound parts or compounds (oligomeric or polymeric products obtained from cationic polymerization of styrenes in phenols), for example of the formula 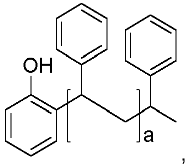 wherein a is 1 or a larger whole number, or branching products - in general, mixtures of a plurality of products formed during the reaction (including poly-substituted products) are obtained, so that the mentioned formulae are at most to be understood as being exemplary and are not necessarily - at least not in all cases - obtained as such.

The term "*phenolic lipids*" is a collective term for a class of natural products that includes long aliphatic chains and phenolic rings. The phenolic lipid is preferably selected from alkyl catechols, alkyl phenols, alkyl resorcinols, and anacardic acids. The at least one phenolic lipid is particularly preferably an alkylphenol selected from propylphenol, butylphenol, amylphenol, octylphenol, nonylphenol, dodecylphenol, and cardanol-based compounds.

The hardener component (B) of the multi-component reactive resin composition may comprise one or more phenol derivatives. The phenol derivatives may be used both individually and in a mixture of two or more of the specified phenol derivatives. The hardener component (B) of the multi-component reactive resin composition preferably contains the phenol derivative in a proportion of from 4 to 25 wt.%, preferably from 10 to 20 wt.%, based on the total weight of the multi-component reactive resin composition.

In a preferred embodiment, the phenol derivative is at least one polyphenol selected from the group of novolac resins and is combined with a salt selected from the group of nitrates. The weight percent ratio of all phenol derivatives, in particular the polyphenols from the group of novolac resins, to all salts in the hardener component (B) is preferably 250:1 to 1:4, more preferably 40:1 to 1:2.

Alternatively, Mannich bases may be used as hardener in hardener component (B). Suitable Mannich bases are the reaction products of a selected amine and an aldehyde or aldehyde precursor with a phenolic compound selected from the group consisting of phenol or a styrolized phenol, pyrocatechol, resorcinol, styrolized resorcinol, hydroquinone, hydroxyhydroquinone, phloroglucin, pyrogallol, o-cresol, m-cresol, p-cresol or bisphenols, such as bisphenol A or bisphenol F, and combinations thereof, preferably phenol or a styrolized phenol, styrolized resorcinol or bisphenol A.

The selected amine for preparing the Mannich base has a structure according to formula (III): 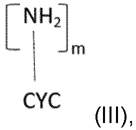 wherein
"*CYC*" means a1) a monocyclic saturated ring having 3 to 12 ring atoms or a2) a bicyclic saturated ring system having 3 to 12 ring atoms per ring, the two rings of the bicyclic saturated ring system being linked to each other via an aliphatic group having 1, 2 or 3 carbon atoms, and each of the two rings carrying at least one of the m amino groups [-NH₂], or a3) a fused di- or polycyclic saturated ring system having 6 to 12 ring atoms, and
m is a positive integer greater than or equal to 2.

The selected amine may also be used in the form of one of its salts. In these cases, one or both hydrogen atoms of the m amino groups [-NH₂] are replaced by alkali metals and/or alkaline earth metals. The use of corresponding salts of the selected amines makes it possible to adjust the solubility properties of the selected amine.

The selected amines for the preparation of the Mannich base are characterized by having at least two NH₂ groups directly bonded to different ring atoms. Preferably, the selected amines have exactly two NH₂ groups directly bonded to different ring atoms. Accordingly, in a preferred embodiment, m is equal to 2.

The definitions of "CYC" described in variants a1), a2), and a3) may optionally be methyl- or dimethyl-substituted per ring in each case.

The definitions of "CYC" described in variants a1), a2), and a3) preferably have an aliphatic structure, i.e. the rings and, if appropriate, the linkage of two rings consist only of carbon and hydrogen atoms. However, it is also possible that the rings according to variants a1), a2), and a3) have heteroatoms.

In these cases, the ring in variant a1) or the ring system in variants a2) and a3) may have 0 to 3 nitrogen atoms, 0 to 3 oxygen atoms, and 0 to 1 sulphur atoms.

Preferably, the number of ring atoms of the definitions of "CYC" described in variants a1), a2), and a3) is 6 to 9, particularly preferably 6.

Particularly preferably, the amine is selected from the group consisting of 1,2-diaminocyclohexane, 1,4-diaminocyclohexane (1,2-DACH and 1,4-DACH), bis(4-aminocyclohexyl)methane (PACM), 4,4'-methylenebis(2-methyl-cyclohexyl-amine) (MACM), 3-aminomethyl-3,5,5-trimethylcyclohexylaminoe (IPDA), 5-(aminomethyl)bicyclo[[2.2.1]hept-2-yl]methylamin (NBDA), and methylcyclohexyl diamine (MCDA).

The selected amines may be used singly or in a mixture of two or more of said selected amines. The amine used for reacting with the aldehyde and the phenolic compound so as to form the Mannich base is preferably one of the above-mentioned amines which are reactive to epoxy groups, and preferably 1,3-benzenedimethanamine (mXDA), 3-aminomethyl-3,5,5-trimethylcyclohexane (IPDA), 1,3-bis(aminomethyl)cyclohexane (1,3-BAC), bis(4-aminocyclohexyl)methane (PACM), methylcyclohexyl diamine (MCDA), and 5-(aminomethyl)bicyclo[[2.2.1]hept-2-yl]methylamine (NBDA). The amine is preferably present in excess, such that the Mannich base has free amino groups.

The amine used for reacting with the aldehyde and the phenolic compound so as to form the Mannich base may also be an aminosilane selected from the group consisting of 3-aminoalkyltrialkoxysilanes, such as 3-aminopropyl-tri(m)ethoxysilane, 3-aminoalkylalkyl dialkoxysilane, such as 3-aminopropylmethyldi(m)ethoxysilane, N-(aminoalkyl)-3-aminoalkyltrialkoxysilanes, such as N-(2-aminoethyl)-3-aminopropyltri(m)ethoxysilane, N-(aminoalkyl)-3-aminoalkyl-alkyldialkoxysilanes such as N-(2-aminoethyl)-3-aminopropylmethyldi(m)ethoxysilane, 3-[2-(2-aminoethylamino)ethylamino]propyl-tri(m)ethoxysilane, bis-(gamma-trimethoxysilylpropyl)amine, and mixtures thereof; or also selected from the group consisting of N-cyclohexyl-3-aminopropyltri(m)ethoxysilane, N-cyclohexylaminomethylmethyldiethoxysilane, N-cyclohexylaminomethyltriethoxysilane, 3-ureidopropyltri(m)ethoxysilane, N-methyl[3-(trimethoxysilyl)-propylcarbamate, N-trimethoxysilylmethyl-O-methylcarbamate, and N-dimethoxy(methyl)silylmethyl-O-methylcarbamate.

To form the Mannich base, a phenolic compound is reacted with at least one of the selected amines described above and an aldehyde or an aldehyde precursor that yields an aldehyde by decomposition. The aldehyde or aldehyde precursor may advantageously be added to the reaction mixture as an aqueous solution, in particular at an elevated temperature of about 50°C to 90°C, and reacted with the selected amine as well as the phenolic compound.

As the phenolic compound, phenol or a styrolized phenol, pyrocatechol, resorcinol, styrolized resorcinol, hydroquinone, hydroxyhydroquinone, phloroglucin, pyrogallol, o-cresol, m-cresol, p-cresol or bisphenols, such as bisphenol A or bisphenol F, and combinations thereof, particularly preferably phenol or a styrolized phenol, styrolized resorcinol or bisphenol A are used to form the Mannich base.

The aldehyde used to form the Mannich base is preferably an aliphatic aldehyde, particularly preferably formaldehyde. Preferably, trioxane or paraformaldehyde may be used as the aldehyde precursor, which decompose to formaldehyde by heating in the presence of water.

Preferably, the selected amine is present in excess during the reaction with the phenolic compound and the aldehyde, so that the Mannich base has free amino groups.

In another embodiment, hardener component (B) of the multi-component reactive resin composition may also comprise mixtures of (i) styrenated phenols with (ii) amines as hardener. Amines usable in the mixture with styrenated phenols (which amines may be present as such or in salt form) include those mentioned above, especially N,N'-bis(3-amino-n-propyl)piperazine (BAPP), 1,3-bis(aminomethyl)cyclohexane (1,3-BAC), N-(2-aminoethyl)piperazine (AEP) or 3-aminomethyl-3,5,5-trimethylcyclohexylamine (isophoronediamine, IPDA), or other low molecular weight polyamines ("*polyamines*" also including diamines), especially oligomeric or monomeric aliphatic, cycloaliphatic, cycloheteroaliphatic, aromatic or araliphatic diamines, such as especially xylylenediamines, more preferably m-xylylenediamine (1,3-bis(amino-methyl)benzene, MXDA); aliphatic polyamines, for example C₁-C₁₀alkane-di- or -poly-amines, e.g. 1,2-diaminoethane, trimethylhexane-1,6-diamine, diethylenetriamine or triethylenetetraamine; oligomeric diamines of the formula H₂N-(CH₂)ᵢ-NH-[(CH₂)ⱼNH]ₖ-(CH₂)ₗ-NH₂, wherein i, j, and I are each independently of the others from 2 to 4, and k is 0, 1 or 2, especially "*triethylenetetramine*" (TETA, i.e. N,N'-bis(2-aminoethyl)ethylenediamine) or tetraethylenepentamine (TEPA); cycloaliphatic amines, such as 1,2-diaminocyclohexane or bis(aminomethyl)tricyclodecane (TCD) or bis(4-aminocyclohexyl)methane (PACM), or amine adducts; or mixtures of two or more thereof; especially mixtures of one or more araliphatic diamines, more preferably m-xylylenediamine, with one or more other polyamines, especially 1,3-BAC, or more preferably one or more araliphatic diamines, especially m-xylylenediamine itself, or mixtures of 1,3-BAC and m-xylylenediamine.

Preferably, component (B) of the inventive multi-component reactive resin composition comprises a filler, more preferably an inorganic filler. Such fillers are already described above in connection with epoxy resin component (A). It is particularly preferred that the filler is selected from silicon-based minerals, more preferably silica, in particular silica or quartz flour. The filler may be present in component (B) in an amount of e.g. 5 to 80 wt.%, preferably 10 to 70 wt.%, more preferably 30 to 70 wt.%, based on the total weight of component (B).

Preferably, component (B) of the inventive multi-component reactive resin composition comprises further additives, in particular solvents, adhesion promoters, thickeners, and accelerators. As preferred solvents, organic solvents may be mentioned, in particular glycerine. As preferred adhesion promoters, silanes may be mentioned, in particular (3-glycidyloxypropyl)trimethoxysilane. As preferred thickeners, minerals may be mentioned, in particular fumed silica.

A multi-component reactive resin composition in the context of the present invention is meant to be in particular a kit with two or more components (preferably a two-component system) with component (A) containing one or more epoxy-based reactive synthetic resin, and hardener (component (B)), where further additives may be provided in one or both of the components, wherein the mutually reactive components (A) and (B) and optionally further separate components are contained in such a way that they cannot react with one another during storage, preferably in such a way that they do not come into contact with one another prior to use, which nevertheless makes it possible to mix and, if necessary, introduce the components (A) and (B) and, if necessary, further components for fixing at the desired location, for example directly in front of or in a hole or gap, in such a way that the curing reaction can take place there. Also suitable are cartridges, for example of plastic, ceramic or in particular glass, in which the components are arranged separated from one another by (for example when an anchoring element is driven into a hole or gap, such as a drilled hole) destructible boundary walls or integrated separate destructible containers, for example as nested cartridges, such as ampoules; as well as in particular multi-component or preferably two-component cartridges, in the chambers of which the preferably two components (in particular components (A) and (B)) of the multi-component reactive resin composition according to the invention are contained for storage prior to use, wherein preferably a static mixer can also be part of the corresponding kit. The use of a multi-component reactive resin composition according to the invention at the desired place of use is then carried out by mixing the associated components.

Components (A) and (B) are preferably mixed in a ratio that gives a largely balanced stoichiometry according to the EEW and AHEW values. For the intended use of the multi-component epoxy resin composition, the epoxy resin component (A) and the hardener component (B) are emptied from the separate chambers and mixed in a suitable device, for example a static mixer or a dissolver. The mixture of epoxy resin component (A) and hardener component (B) is then introduced into the previously cleaned borehole by means of a known injection device. The element to be fixed is then inserted into the mortar mass and adjusted. The reactive components of the hardener component (B) react with the epoxy resins of the epoxy resin component (A) under polyaddition so that the epoxy resin compound cures within a desired time. The reactive components of the hardener component (B) may additionally react with the epoxide-acrylate hybrid molecules of the resin component (A) under polyaddition and Michael reaction so that a cross-linking may be established.

It is preferred that the ratio of component (A) to component (B) is 2:1 to 1:2, more preferably 1.5:1 to 1:1.5, with a ratio of 1:1 being most preferred, wherein the ratio is based on the epoxy equivalent value of component (A) and the functional group equivalent value of component (B). The epoxy equivalent value of component (A) is sometimes also referred to as EEW value. In case the functional group is a thiol group, the thiol equivalent value of component (B) is used for calculating the ratio. In case the functional group is an amino group, the amino equivalent value of component (B) is used for calculating the ratio. The amino equivalent value of component (B) is sometimes also referred to as AHEW value. A respective ratio of component (A) to component (B) may lead to a complete reaction of component (A) with component (B) and may be used for controlling the thermal and mechanical properties of a respective reaction product.

The multi-component reactive resin composition according to the invention is preferably used for construction purposes. The term "*for construction purposes*" means construction bonding of concrete/concrete, steel/concrete or steel/steel or one of the mentioned materials on other mineral materials, structural reinforcement of building elements made of concrete, masonry, and other mineral materials, reinforcement applications with fiber-reinforced polymers of construction objects, chemical fastening on surfaces made of concrete, steel or other mineral materials, in particular the chemical fixing of structural elements and anchoring means, such as anchor rods, anchor bolts, (threaded) rods, (threaded) sleeves, concrete irons, screws, and the like, in drilled holes in various substrates, such as (steel) concrete, masonry, other mineral materials, metals (e.g. steel), ceramics, plastics, glass, and wood. As used herein, the term "*masonry*" shall include, but is not limited to, stone, brick, ceramic tile, cement tile, hollow concrete block, and solid concrete block.

The invention is thus related to the use of a multi-component reactive resin composition according to the invention for chemical anchoring, in particular for chemically anchoring an element in or to a substrate, preferably in or to a substrate selected from the group consisting of concrete, steel concrete, masonry, other mineral materials, metals such as steel, ceramics, plastics, glass, and wood.

Preferably, the multi-component reactive resin compositions described above are used for chemical fixing of anchoring elements in a hole or gap in a building substrate.

The invention further relates to a method for fixing an anchoring element in a hole or crevice in a building substrate, wherein a multi-component reactive resin composition as described above, and an anchoring element are introduced into the hole or crevice and allowed to cure.

Furthermore, the invention is related to a mortar comprising a physical mixture of component (A) and component (B) of a multi-component reactive resin composition as described above.

Subject of the invention is also a cured system comprising a mortar as described above. In such a cured system, the mixture of component (A) and component (B) is hardened, and the reaction between component (A) and component (B) is preferably complete.

Subject of the invention is also a process for preparing a mortar from the inventive multi-component reactive resin composition as described herein, which process comprises the steps:
- separately providing component (A) and component (B), and
- thereafter mixing component (A) and component (B).

Subject of the invention is also the use of an inventive multi-component reactive resin composition as described herein for chemical anchoring, in particular for chemically anchoring an element in or to a substrate, preferably in or to a substrate selected from the group consisting of concrete, steel concrete, masonry, other mineral materials, metals such as steel, ceramics, plastics, glass, and wood.

Both, the inventive process and the inventive use, profit from the advantages of the inventive multi-component reactive resin composition. Particularly pronounced is the effect of an improved chemical anchoring performance.

Further advantages of the invention will be apparent from the following description of preferred embodiments, which, however, are not to be understood as limiting in any way. All embodiments of the invention may be combined within the scope of the invention.

### Materials and methods

In the present invention, in particular the following chemicals have been used:

**Table 1: Chemicals used.**

| **Abbreviation** | **Name** | **Brand name** | **Supplier** |
|---|---|---|---|
| TMPTA | Trimethylolpropane triacrylate | Trimethylolpropane triacrylate | Sigma Aldrich, Germany |
| - | MCure^{®} 400 (mixture of acrylates) | MCure^{®} 400 | Arkema - Sartomer, France |
| DGEBA | Bisphenol-A-diglycidylether | Araldite^{®} GY 240 | Huntsman Advanced Materials, Germany |
| DGEBF | Bisphenol-F-diglycidylether | Araldite^{®} GY 282 | Huntsman Advanced Materials, Germany |
| BDDGE | 1,4-Butanediol diglycidylether | Araldite^{®} DY-026 | Huntsman Advanced Materials, Germany |
| TMPTGE | Trimethylolpropane triglycidyl ether | Araldite^{®} DY-T-CH | Huntsman Advanced Materials, Germany |
| Erisys^{®} GE 40 | Epoxidized pentaerythritol | Erisys^{®} GE 40 | CVC Thermoset Specialties, Germany |
| Erisys^{®} GE 60 | Epoxidized sorbitol | Erisys^{®} GE 60 | CVC Thermoset Specialties, Germany |
| Millisil^{®} W12 | Quartz flour, average grain size d₅₀ = 16 µm | Millisil^{®} W12 | Quarzwerke, Germany |
| CabOSil^{®} TS 720 | Fumed silica | CabOSil^{®} TS 720 | Cabot Corporation, Germany |
| Aerosil^{®} R805 | Fumed silica | Aerosil^{®} R805 | Evonik Resources Efficiency, Germany |
| mXDA | m-Xylylenediamine | mXDA | MGC, Japan |
| Dytek^{®} A | 2-Methylpentane-1,5-diamine | Dytek^{®} A | Invista, Netherlands |
| N-AEP | N-(2-aminoethyl)piperazine | N-AEP | TCI Europe |
| 1,3-BAC | 1,3-Bis(aminomethyl)cyclohexan | 1,3-BAC | Itochu, Germany |
| - | Beckopox^{™} SEH 2627 (Mannich base) | Beckopox^{™} SEH 2627 | Allnex, Belgium |
| Ancamine^{®} K54 | Tris-2,4,6-dimethylaminomethyl phenol | Ancamine^{®} K54 | Air products, Netherlands |
| Ca(NO₃)₂ | Calcium nitrate tetrahydrate | Calcium nitrate tetrahydrate | Sigma Aldrich, Germany |
| Glycerine | 1,2,3-Propanetriol | Glycerine | Merck, Germany |
| - | Phenolite^{™} TD 2131 | Phenolite^{™} TD 2131 | DIC Europe, Germany |
| - | Novares^{®} LS 500 | Novares^{®} LS 500 | Rütgers Novares GmbH, Germany |
| - | Acrylic acid | Acrylic acid | Sigma Aldrich, Germany |
| - | Tetraethylammonium bromide | Tetraethylammonium bromide | Merck KGaA, Germany |
| TEMPOL | 4-Hydroxy-2,2,6,6-tetramethyl-piperidinyl-1-oxyl | TEMPOL | Evonik Degussa GmbH, Germany |
| - | Phenothiazine | D Prills | Allessa Chemie, Germany |
| - | 4-Methoxyphenol | 4-Methoxyphenol | TCI Europe |

In the present invention, the following analytical methods have been used:

### Curing speed tests using Yokogawa

Curing tests of the epoxide-acrylate hybrid molecules according to the invention compared to their corresponding epoxidized polyols were made using a Yokogawa oscilloscope connected to thermocouples. Using this set-up, time vs temperature curves were recorded. The samples used and the results obtained are summarized in Table 3.

### KOH stability

To determine the KOH stability of the mortars described in Table 4, the following experiments were performed. 100 g of the mixed mortar (A+B) were placed on a 55 mm diameter circular plastic mold to form a "cookie". Five cookies per example were generated. After 24 h curing at RT, the five cookies were removed from the mold and stored for 5 days at 23°C with 50% humidity. After that, shore D values of each cookie were measured to take the reference point. Then, the cookies were immersed and stored in a KOH aqueous solution (10 g KOH in 90 mL water) for 7 days at 40°C. After 7 days, the cookies were removed from the KOH bath and rinsed with water and isopropanol before drying them in an oven at 50°C for 20 minutes on each side. After that, the shore D value was again measured and the average value from the 5 cookies registered in Table 4. For getting the 42 days value, the same cookies were stored back into the KOH solution. After 35 additional days (42 days total storage time), the procedure was repeated to obtain the 42 days KOH stability values.

### Pull-out tests

To determine the bond strength in concrete, pull-out experiments under B5 (8h, RT), R1 (24h, RT), and B4 (24h, 5°C) conditions were made following the description given by the guideline ETAG 001 part 5 (Guideline For European Technical Approval Of Metal Anchors For Use In Concrete) superseded by EAD 330499-00-0601. In these experiments, threaded rods (size M12) were installed in 14 mm cleaned (2x compressed air 6 bar, 2x brushed and 2x compressed air 6 bar) hammered drilled boreholes made in concrete plates (C20/25) with 60 mm embedment depth. After the curing time at the temperature as specified in brackets, the bond strength was determined in pull-out tests.

### Examples

### Synthesis and characterization of the epoxide-acrylate hybrid monomers

Acrylates can be obtained by ring opening reaction of epoxides with acrylic acid. This reaction leads to the formation of acrylate functions with vicinal hydroxy groups. The use of sub-stoichiometric amounts of acrylic acid leads to epoxide-acrylate hybrid monomers.

The corresponding epoxidized polyol, phenothiazine, tetraethylammonium bromide and 1^{st} portion of TEMPOL were charged in a reaction vessel and heated to 100°C. A clear solution was obtained. Acrylic acid was added dropwise to the solution in a way that the temperature of the reaction mixture was held between 100°C and 110°C. After complete addition of acrylic acid, the reaction mixture was heated to 100°C for one hour and afterwards cooled down to 50°C. At 50°C 4-methoxyphenol and the 2^{nd} portion of TEMPOL were added and afterwards the reaction mixture was cooled to room temperature.

Reaction scheme of the synthesis of HyMo-1:

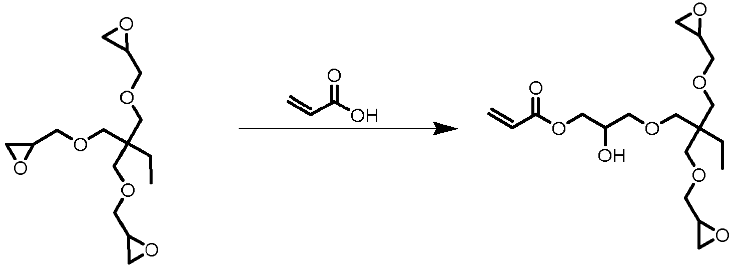

**Table 2: Educts for the synthesis of different epoxide-acrylate hybrid monomers (HyMo).**

| | **HyMo-1** | **HyMo-2** | **HyMo-3** | **HyMo-4** | **HyMo-5** |
|---|---|---|---|---|---|
| Araldite^{®} DY-T-CH / g | 835.6 | 720.3 | | | |
| Erisys^{®} GE 40 / g | | | 712.8 | 599.0 | |
| Erisys^{®} GE 60 / g | | | | | 674.0 |
| Acrylic acid / g | 158.8 | 273.7 | 77.8 | 196.2 | 119.6 |
| Tetraethylammonium bromide / g | 4.63 | 5.0 | 4.0 | 4.0 | 4.0 |
| Phenothiazine / g | 0.20 | 0.20 | 0.16 | 0.16 | 0.16 |
| 1^{st} portion of TEMPOL / g | 0.20 | 0.20 | 0.16 | 0.16 | 0.16 |
| 2^{nd} portion of TEMPOL / g | 0.40 | 0.40 | 0.32 | 0.32 | 0.32 |
| 4-Methoxyphenol / g | 0.20 | 0.20 | 0.16 | 0.16 | 0.16 |

### Idealized structures of the epoxide-acrylate hybrid monomers (HyMo)

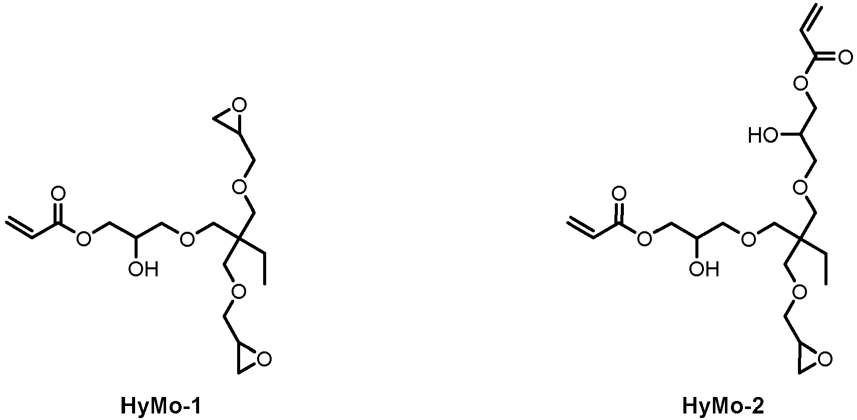

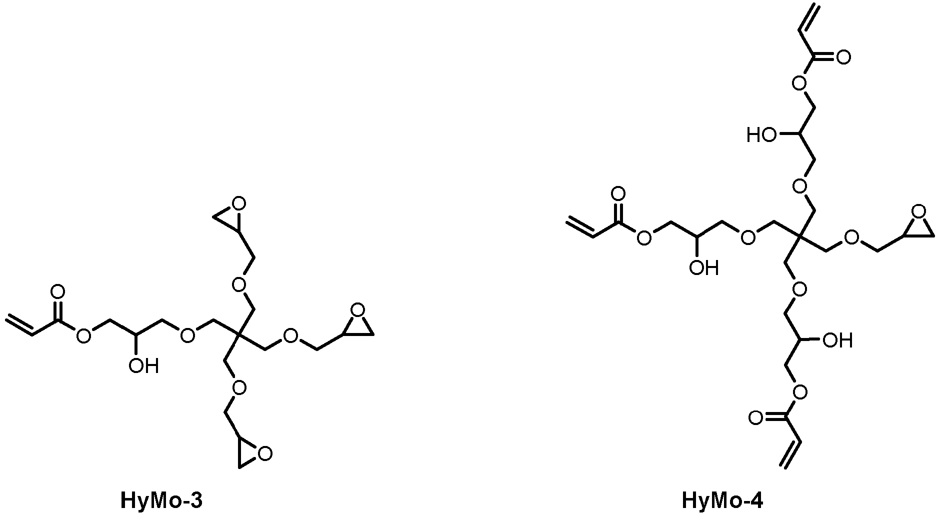

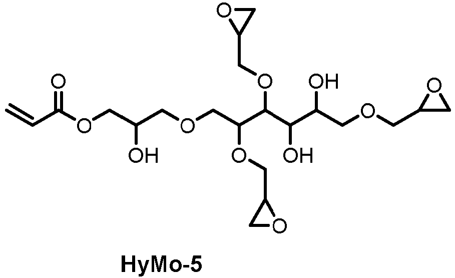

Curing experiments with the epoxidized polyols and the epoxide-acrylate hybrid monomers

An inorganic salt-accelerated, mXDA-hardener solution was prepared by mixing 2 g of a Ca(NO₃)₂ solution (80% in glycerine) in 100 g mXDA. The calculated Amine Hydrogen Equivalent Weight (AHEW) of the hardener is 34 g/eq. This hardener was used to cure the different hybrid monomers (as pure resins).

To calculate the required amount of resin, the idealized structure of the epoxide-acrylate hybrid monomers was assumed and their molecular weights were divided by the functionality of each molecule considering that one epoxide group reacts with one amine group and that one acrylate group reacts with one amine group. Following this calculation, the so-called epoxy-acrylate equivalent weight (EAEW) was defined for the hybrid monomers in analogy to the well-known epoxy equivalent weight (EEW) like described in for example https://de.wikipedia.org/wiki/Epoxid-Äquivalentgewicht. For the curing experiments, the required amount of the hardener calculated based on the EAEW was mixed with the required amount of resin (see Table 3) using a spatula for 30 seconds at room temperature in a glass vial. Then, a thermocouple was immersed in the freshly made mixture and the temperature evolution was recorded *versus* time using the Yokogawa set-up.

**Table 3: Amount of resin and hardener used for the curing experiments.**

| **Resin** | **EAEW** /g/eq | **Mass Resin** / wt. % | **Mass Hardener** / wt. % | **time to Tmax** / min | **Tmax** / °C |
|---|---|---|---|---|---|
| TMPTGE | 100.25 | 74.85 | 25.15 | 34 | 248 |
| HyMo-1 | 124.81 | 78.78 | 21.22 | 30 | 95 |
| HyMo-2 | 148.83 | 81.42 | 18.58 | 13 | 70 |
| Erisys^{®} GE40 | 93.61 | 73.35 | 26.65 | 51 | 348 |
| HyMo-3 | 111.62 | 76.81 | 23.19 | 34 | 105 |
| HyMo-4 | 147.66 | 81.09 | 18.91 | 10 | 70 |
| Erisys^{®} GE 60 | 86.43 | 71.77 | 28.23 | 27 | 339 |
| HyMo-5 | 122.13 | 78.51 | 21.49 | 11 | 59 |

The curing experiments reveal an increase in curing speed at room temperature for HyMo-1 to HyMo-5 compared to their corresponding epoxidized polyols (TMPTGE, Erisys^{®} GE 40 and 60). Furthermore, when using HyMo-1 to HyMo-5 the maximum temperatures of the curing were not as elevated as for the corresponding epoxidized polyols.

KOH stability experiments with the corresponding epoxidized polyol, the acrylate references, and epoxide-acrylate hybrid monomers HyMo-1 and HyMo-2

Examples A to E were generated for the KOH stability experiments. All these examples are the same formulation with the only difference of the polyfunctional reactive diluent used. Taking example A as a reference (where all resins in component A are epoxy based), it could be observed that analogous variants containing TMPTA or MCure^{®} 400 are not KOH stable and their hardness decreased during storage in KOH, probably due to the hydrolysis of the acrylate ester groups. However, when using the epoxide-acrylate hybrid monomers HyMo-1 and HyMo-2, the cured compositions are KOH stable as the stable Shore D values show (see Table 4).

**Table 4: Amount of resin and hardener used for the KOH stability experiments and KOH stability data after 7 days storage and 42 days storage in inventive examples (IE) and reference examples (RE).**

| **A component / Resin** | **RE A** | **RE B** | **RE C** | **IE D** | **IE E** |
|---|---|---|---|---|---|
| DGEBA - Araldite^{®} GY 240 / wt.% | 34.5 | 34.5 | 34.5 | 34.5 | 34.5 |
| DGEBF - Araldite^{®} GY 282 / wt.% | 17.7 | 17.7 | 17.7 | 17.7 | 17.7 |
| BDDGE - Araldite^{®} DY-026 / wt.% | 6.9 | 6.9 | 6.9 | 6.9 | 6.9 |
| TMPTGE - Araldite^{®} DY-T-CH / wt.% | 6.9 | | | | |
| TMPTA / wt.% | | 6.9 | | | |
| MCure^{®} 400 / wt.% | | | 6.9 | | |
| HyMo-1 /wt.% | | | | 6.9 | |
| HyMo-2 / wt.% | | | | | 6.9 |
| Millisil^{®} W12 / wt.% | 31.7 | 31.7 | 31.7 | 31.7 | 31.7 |
| CabOSil^{®} TS 720 / wt.% | 2.3 | 2.3 | 2.3 | 2.3 | 2.3 |
| **EEW** / g/eq | 234 | 233 | 227 | 247 | 252 |

| **B component / Hardener** | | | | | |
|---|---|---|---|---|---|
| Ca(NO₃)₂ (80% in glycerine) / wt.% | 1.9 | 1.9 | 1.9 | 1.9 | 1.9 |
| mXDA/wt.% | 54.1 | 54.1 | 54.1 | 54.1 | 54.1 |
| Millisil^{®} W12 / wt.% | 37.2 | 37.2 | 37.2 | 37.2 | 37.2 |
| Aerosil^{®} R805 / wt.% | 6.8 | 6.8 | 6.8 | 6.8 | 6.8 |
| **AHEW** / g/eq | 63 | 63 | 63 | 63 | 63 |
| **KOH stability after 7 days (Decrease Shore D in %)** | 1.2 | 4.4 | 8.0 | 1.5 | 1.4 |
| **KOH stability after 42 days (Decrease Shore D in %)** | 2.1 | 19.9 | 26.2 | 1.4 | 6.1 |

### Preparation of Component A (Resin)

In a plastic bucket, the liquid epoxy resins were mixed with a wood spatula. Then, the filler and thickener were added and premixed by hand before mixing it further in a dissolver (PC Laborsystem, Volume 1L) during 8.5 minutes under 80 mbar reduced pressure at 3500 rpm.

### Preparation of Component B (Hardener)

For the specific case of the examples where inorganic accelerated hardeners are used: The calcium nitrate was used as an 80% solution in glycerine. For that, 400 g of Ca(NO₃)₂ tetrahydrate were added to 100 g of glycerine and stirred at 50°C until complete solution (ca. 3 hours).

For the preparation of the component B, in a plastic bucket, the specified amount of accelerator or accelerator mixture was added and dissolved in the amine mixture. Then, the filler and thickener were added and premixed by hand before mixing it further in a dissolver (PC Laborsystem, Volume 1L) during 8.5 minutes under 80 mbar reduced pressure at 3500 rpm.

### Mortars preconditioning, mixing and injection in the borehole

For the experiments at room temperature, components A and B were mixed with a stoichiometry of one to one based on their EEW and AHEW values using a speedmixer at 1500 rpm for 30 s before injection in the borehole. For injection in the borehole, the mixed mortar was transferred into a one component silicone cartridge.

For the experiments at 5°C, components A and B were previously and separately stored at 0°C for 24 hours. Then, components A and B were mixed with a stoichiometry of one to one based on their EEW and AHEW values using a speedmixer at 1000 rpm for 15 s. The temperature of the mixed mortars was measured to be 5°C before injection in the borehole. For injection in the borehole, the mixed mortar was transferred into a one component silicone cartridge. The concrete substrate was also previously tempered to 5°C for 24 hours.

Tables 5 and 6 list the multi-component reactive resin compositions and mortars prepared in the examples.

When using the epoxide-acrylate hybrid molecules according to the invention in the resin component of a multi-component reactive resin composition for anchoring applications, it was surprisingly found that the curing speed and thus the evolution of the bond strength could be enhanced. The faster curing speed leads to similar loads at room temperature after 8 h and 24 h. However, it was surprisingly found that in most cases higher loads could be achieved under more challenging curing conditions like low temperatures, such as 5°C, where the curing proceeds slower. These results present a clear advantage for anchoring applications because they allow obtaining anchor points with higher loads in shorter periods of time under challenging installation conditions like low temperatures on the job site.

**Table 5: Inventive examples (IE) and reference examples (RE).**

| **A component / Resin** | **RE 1** | **IE 2** | **IE 3** | **RE 4** | **IE 5** | **IE 6** | **RE 7** | **IE 8** | **IE 9** | **RE 10** | **IE 11** | **IE 12** | **RE 13** | **IE 14** | **IE 15** |
|---|---|---|---|---|---|---|---|---|---|---|---|---|---|---|---|
| DGEBA - Araldite^{®} GY 240 / wt.% | 34.5 | 34.5 | 34.5 | 34.5 | 34.5 | 34.5 | 34.5 | 34.5 | 34.5 | 34.5 | 34.5 | 34.5 | 34.5 | 34.5 | 34.5 |
| DGEBF - Araldite^{®} GY 282 / wt.% | 17.7 | 17.7 | 17.7 | 17.7 | 17.7 | 17.7 | 17.7 | 17.7 | 17.7 | 17.7 | 17.7 | 17.7 | 17.7 | 17.7 | 17.7 |
| BDDGE - Araldite^{®} DY-026 / wt. % | 6.9 | 6.9 | 6.9 | 6.9 | 6.9 | 6.9 | 6.9 | 6.9 | 6.9 | 6.9 | 6.9 | 6.9 | 6.9 | 6.9 | 6.9 |
| TMPTGE - Araldite^{®} DY-T-CH / wt.% | 6.9 | | | | | | 6.9 | | | | | | 6.9 | | |
| HyMo-1 /wt.% | | 6.9 | | | | | | 6.9 | | | | | | 6.9 | |
| HyMo-2 / wt.% | | | 6.9 | | | | | | 6.9 | | | | | | 6.9 |
| Erisys^{®} GA 40 / wt.% | | | | 6.9 | | | | | | 6.9 | | | | | |
| HyMo-3 / wt. % | | | | | 6.9 | | | | | | 6.9 | | | | |
| HyMo-4 / wt.% | | | | | | 6.9 | | | | | | 6.9 | | | |
| Millisil^{®} W12 / wt.% | 31.7 | 31.7 | 31.7 | 31.7 | 31.7 | 31.7 | 31.7 | 31.7 | 31.7 | 31.7 | 31.7 | 31.7 | 31.7 | 31.7 | 31.7 |
| CabOSil^{®} TS 720 / wt.% | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 |
| **EEW** / g/eq | 234 | 247 | 252 | 250 | 250 | 257 | 234 | 247 | 252 | 250 | 250 | 257 | 234 | 247 | 252 |

| **B component / Hardener** | **RE 1** | **IE 2** | **IE 3** | **RE 4** | **IE 5** | **IE 6** | **RE 7** | **IE 8** | **IE 9** | **RE 10** | **IE 11** | **IE 12** | **RE 13** | **IE 14** | **IE 15** |
|---|---|---|---|---|---|---|---|---|---|---|---|---|---|---|---|
| Beckopox^{™} SEH 2627 / wt. % | | | | | | | | | | | | | 70 | 70 | 70 |
| Novares^{®} LS 500 / wt.% | | | | | | | 23.8 | 23.8 | 23.8 | 23.8 | 23.8 | 23.8 | | | |
| Phenolite^{™} TD-2131 / wt.% | 10.2 | 10.2 | 10.2 | 10.2 | 10.2 | 10.2 | | | | | | | | | |
| mXDA/wt.% | 8 | 8 | 8 | 8 | 8 | 8 | 50 | 50 | 50 | 50 | 50 | 50 | | | |
| Dytek^{®} A / wt. % | 32.2 | 32.2 | 32.2 | 32.2 | 32.2 | 32.2 | | | | | | | | | |
| Millisil^{®} W12 / wt.% | 42.8 | 42.8 | 42.8 | 42.8 | 42.8 | 42.8 | 23.2 | 23.2 | 23.2 | 23.2 | 23.2 | 23.2 | 24.3 | 24.3 | 24.3 |
| CabOSil^{®} TS 720 / wt.% | 4.4 | 4.4 | 4.4 | 4.4 | 4.4 | 4.4 | 3 | 3 | 3 | 3 | 3 | 3 | 2.7 | 2.7 | 2.7 |
| Ancamine^{®} K54 / wt.% | 2.4 | 2.4 | 2.4 | 2.4 | 2.4 | 2.4 | | | | | | | 3 | 3 | 3 |
| **AHEW** / g/eq | 74 | 74 | 74 | 74 | 74 | 74 | 68 | 68 | 68 | 68 | 68 | 68 | 76 | 76 | 76 |
| **Pull out B5 (RT, 8h)** / MPa | 36.2 | 37.4 | 37.1 | 36 | 37 | 37 | | | | | | | | | |
| **Pull out R1 (RT, 24 h)** / MPa | 35 | 34.1 | 33.3 | 32.2 | 35.5 | 34.1 | | | | | | | | | |
| **Pull out B4 (5°C, 24h) /** MPa | 21.6 | 22.9 | 23.4 | 21 | 21.7 | 24.7 | 22.8 | 27.2 | 27.4 | 30.3 | 29 | 31.2 | 20.8 | 21.7 | 21.4 |

**Table 6: Inventive examples (IE) and reference examples (RE).**

| **A component / Resin** | **RE 16 (or A)** | **IE 17 (or D)** | **IE 18 (or E)** | **RE 19** | **IE 20** | **IE 21** | **RE 22** | **IE 23** | **IE 24** | **RE 25** | **IE 26** | **IE 27** |
|---|---|---|---|---|---|---|---|---|---|---|---|---|
| DGEBA - Araldite^{®} GY 240 / wt.-% | 34.5 | 34.5 | 34.5 | 34.5 | 34.5 | 34.5 | 34.5 | 34.5 | 34.5 | 34.5 | 34.5 | 34.5 |
| DGEBF - Araldite^{®} GY 282 / wt. % | 17.7 | 17.7 | 17.7 | 17.7 | 17.7 | 17.7 | 17.7 | 17.7 | 17.7 | 17.7 | 17.7 | 17.7 |
| BDDGE - Araldite^{®} DY-026 / wt. % | 6.9 | 6.9 | 6.9 | 6.9 | 6.9 | 6.9 | 6.9 | 6.9 | 6.9 | 6.9 | 6.9 | 6.9 |
| TMPTGE - Araldite^{®} DY-T-CH / wt.% | 6.9 | | | | | | 6.9 | | | 6.9 | | |
| HyMo-1 /wt.% | | 6.9 | | | | | | 6.9 | | | 6.9 | |
| HyMo-2 /wt.% | | | 6.9 | | | | | | 6.9 | | | 6.9 |
| Erisys^{®} GA 40/ wt. % | | | | 6.9 | | | | | | | | |
| HyMo-3 / wt. % | | | | | 6.9 | | | | | | | |
| HyMo-4 / wt.% | | | | | | 6.9 | | | | | | |
| Millisil^{®} W12 / wt.% | 31.7 | 31.7 | 31.7 | 31.7 | 31.7 | 31.7 | 31.7 | 31.7 | 31.7 | 31.7 | 31.7 | 31.7 |
| CabOSil^{®} TS 720 /wt.% | 2.3 | 2.3 | 2.3 | 2.3 | 2.3 | 2.3 | 2.3 | 2.3 | 2.3 | 2.3 | 2.3 | 2.3 |
| **EEW** / g/eq | 234 | 247 | 252 | 250 | 250 | 257 | 234 | 247 | 252 | 234 | 247 | 252 |

| **B component / Hardener** | **RE 16 (or A)** | **IE 17 (or D)** | **IE 18 (or E)** | **RE 19** | **IE 20** | **IE 21** | **RE 22** | **IE 23** | **IE 24** | **RE 25** | **IE 26** | **IE 27** |
|---|---|---|---|---|---|---|---|---|---|---|---|---|
| Ca(NO₃)₂ (80% in glycerine) / wt.% | 1.9 | 1.9 | 1.9 | 1.9 | 1.9 | 1.9 | 1.9 | 1.9 | 1.9 | 1.9 | 1.9 | 1.9 |
| mXDA / wt. % | 54.1 | 54.1 | 54.1 | 54.1 | 54.1 | 54.1 | | | | | | |
| N-AEP / wt.% | | | | | | | 54.1 | 54.1 | 54.1 | | | |
| 1, 3-BAC / wt. % | | | | | | | | | | 54.1 | 54.1 | 54.1 |
| Millisil^{®} W12 /wt.% | 37.2 | 37.2 | 37.2 | 37.2 | 37.2 | 37.2 | 37.2 | 37.2 | 37.2 | 37.2 | 37.2 | 37.2 |
| Aerosil^{®} R805 / wt.% | 6.8 | 6.8 | 6.8 | 6.8 | 6.8 | 6.8 | 6.8 | 6.8 | 6.8 | 6.8 | 6.8 | 6.8 |
| **AHEW** / g/eq | 63 | 63 | 63 | 63 | 63 | 63 | 79 | 79 | 79 | 66 | 66 | 66 |
| **Pull out B4 (5°C, 24 h) /** MPa | 22.8 | 27.2 | 27.4 | 30.3 | 29 | 31.2 | 13.5 | 13.5 | 14.1 | 20.9 | 20.5 | 19.3 |

## Claims

1. An epoxide-acrylate hybrid molecule comprising a polyol backbone and bearing at least one epoxy group and at least one acrylate group being selected from the group consisting of 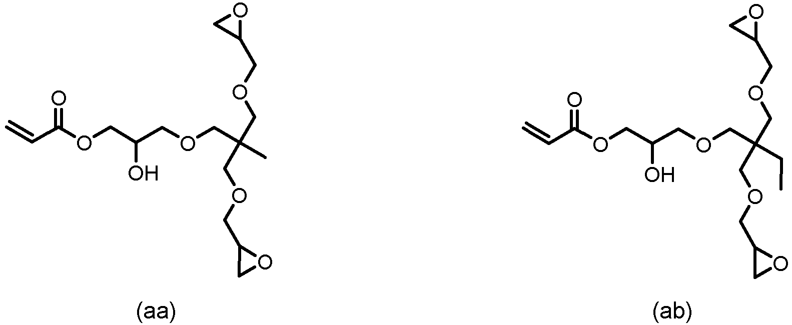 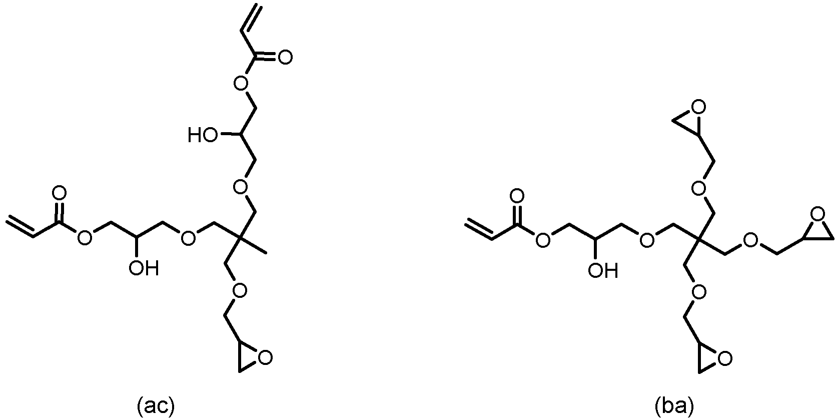 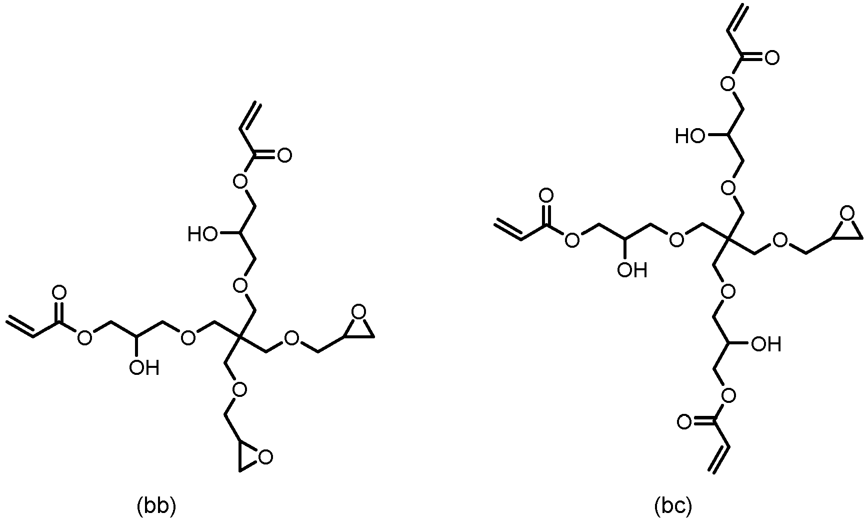 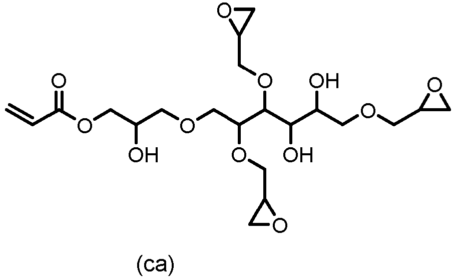 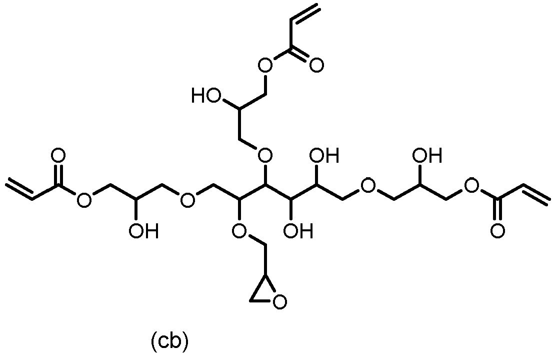 and all constitutional isomers to formulas (ca) and (cb).

2. Use of an epoxide-acrylate hybrid molecule according to claim 1 in an epoxy resin mixture.

3. Use of an epoxide-acrylate hybrid molecule according to claim 1 in a multi-component reactive resin composition for chemical anchoring, in particular for chemically anchoring an element in or to a substrate.

4. Use of an epoxide-acrylate hybrid molecule according to claim 1 in a multi-component reactive resin composition to improve stability under basic conditions.

5. An epoxy resin mixture comprising
(i) at least one curable epoxy resin, and
(ii) at least one epoxide-acrylate hybrid molecule according to claim 1.

6. The epoxy resin mixture according to claim 5 further comprising one or more reactive diluents.

7. The epoxy resin mixture according to claim 5 or 6 further comprising one or more organic additives.

8. An epoxy resin component (A) comprising an epoxy resin mixture according to any one of claims 5 to 7 and further comprising fillers and inorganic additives.

9. Multi-component reactive resin composition comprising an epoxy resin component (A) according to claim 8 and a component (B) comprising at least one hardener.

10. The multi-component reactive resin composition according to claim 9, wherein the component (B) further comprises fillers and/or accelerators and/or thickeners.

11. Use of a multi-component reactive resin composition according to claim 9 or 10 for chemical anchoring, in particular for chemically anchoring an element in or to a substrate.

## Patentansprüche

1. Epoxid-Acrylat-Hybridmolekül, umfassend eine Polyolhauptkette und das mindestens eine Epoxidgruppe und mindestens eine Acrylatgruppe trägt, ausgewählt aus der Gruppe, bestehend aus 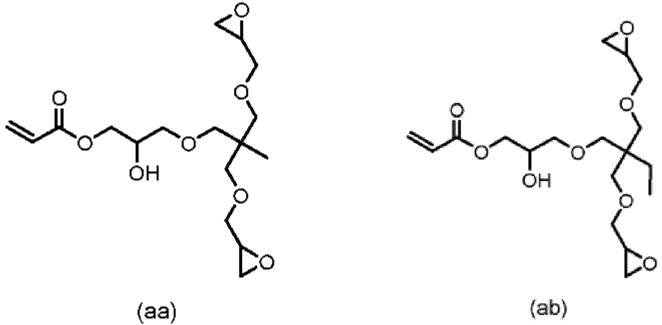 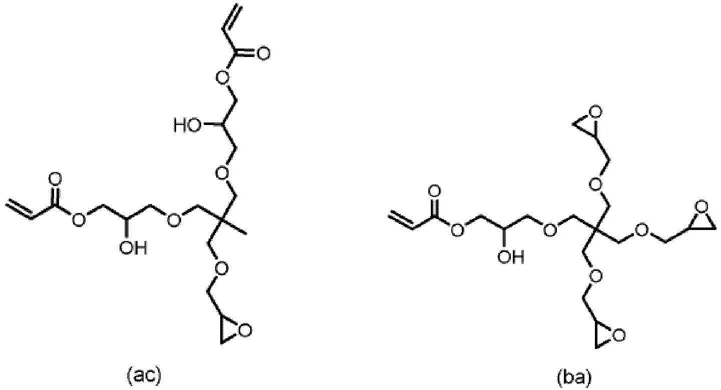 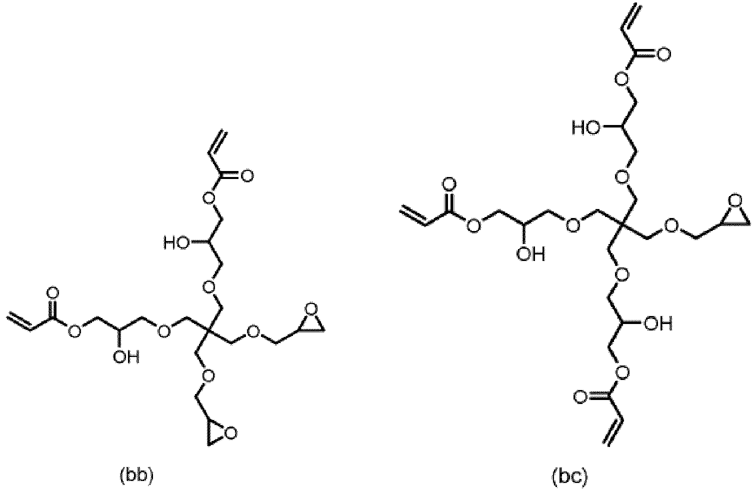 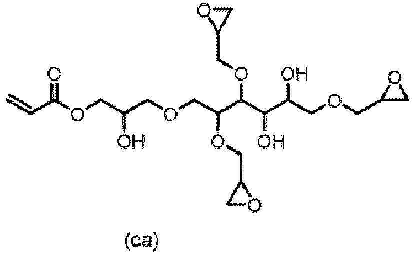 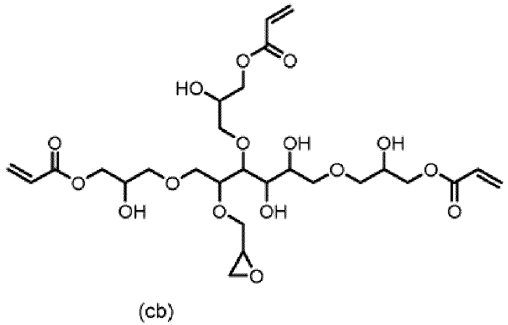 und allen Konstitutionsisomeren zu Formeln (ca) und (cb).

2. Verwendung eines Epoxid-Acrylat-Hybridmoleküls nach Anspruch 1 in einer Epoxidharzmischung.

3. Verwendung eines Epoxid-Acrylat-Hybridmoleküls nach Anspruch 1 in einer mehrkomponentigen Reaktivharzzusammensetzung für chemische Verankerung, insbesondere für chemische Verankerung eines Elements in oder an einem Substrat.

4. Verwendung eines Epoxid-Acrylat-Hybridmoleküls nach Anspruch 1 in einer mehrkomponentigen Reaktivharzzusammensetzung, um die Stabilität unter basischen Bedingungen zu verbessern.

5. Epoxidharzmischung, umfassend
(i) mindestens ein härtbares Epoxidharz und
(ii) mindestens ein Epoxid-Acrylat-Hybridmolekül nach Anspruch 1.

6. Epoxidharzmischung nach Anspruch 5, ferner umfassend einen oder mehrere Reaktivverdünner.

7. Epoxidharzmischung nach Anspruch 5 oder 6, ferner umfassend ein oder mehrere organische Additive.

8. Epoxidharzkomponente (A), umfassend eine Epoxidharzmischung nach einem der Ansprüche 5 bis 7 und ferner umfassend Füllstoffe und anorganische Additive.

9. Mehrkomponentige Reaktivharzzusammensetzung, umfassend eine Epoxidharzkomponente (A) nach Anspruch 8 und eine Komponente (B), umfassend mindestens einen Härter.

10. Mehrkomponentige Reaktivharzzusammensetzung nach Anspruch 9, wobei die Komponente (B) ferner Füllstoffe und/oder Beschleuniger und/oder Verdicker umfasst.

11. Verwendung einer mehrkomponentigen Reaktivharzzusammensetzung nach Anspruch 9 oder 10 für chemische Verankerung, insbesondere für chemische Verankerung eines Elements in oder an einem Substrat.

## Revendications

1. Molécule hybride époxyde-acrylate comprenant une chaîne principale polyol et portant au moins un groupe époxyde et au moins un groupe acrylate, choisie dans le groupe constitué de 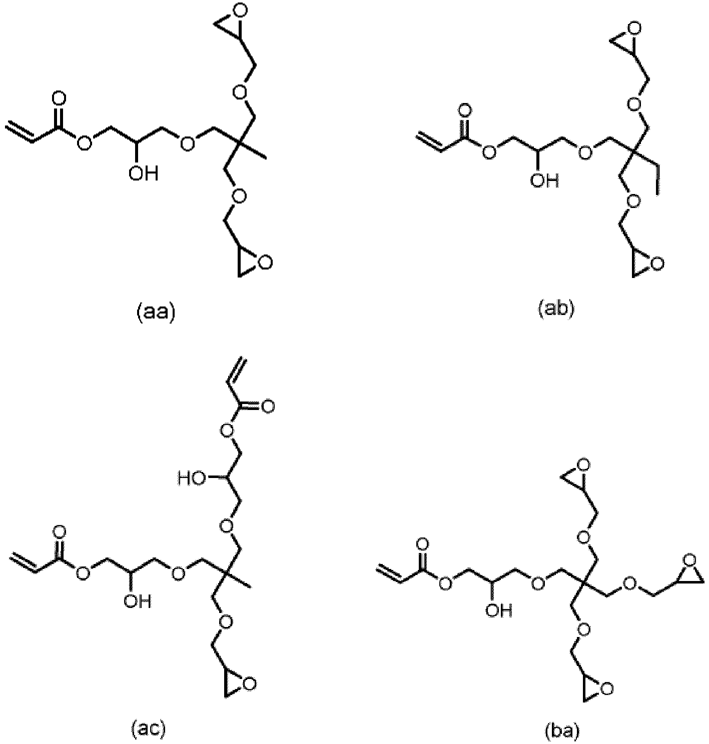 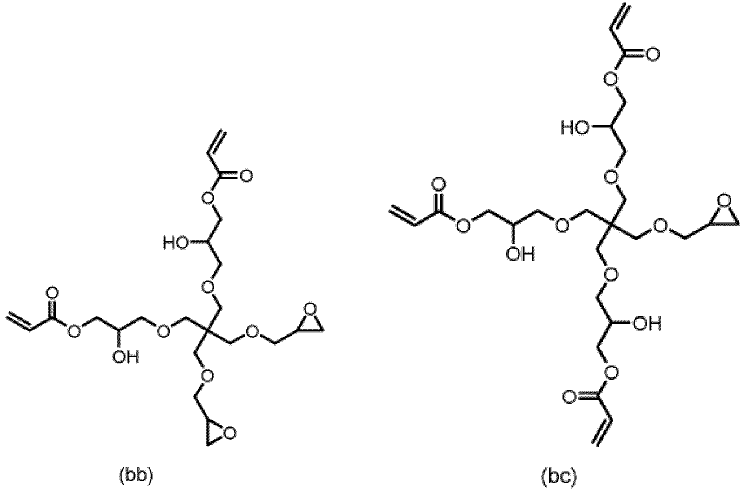 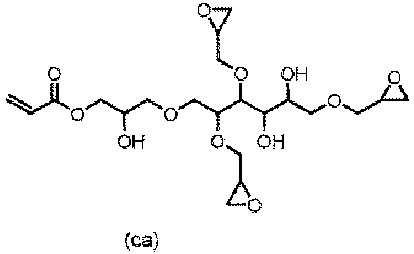 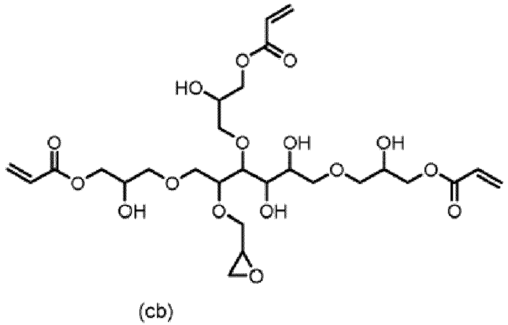 et tous les isomères de constitution des formules (ca) et (cb).

2. Utilisation d'une molécule hybride époxyde-acrylate selon la revendication 1 dans un mélange de résine époxy.

3. Utilisation d'une molécule hybride époxyde-acrylate selon la revendication 1 dans une composition de résine réactive multi-composants pour l'ancrage chimique, notamment pour l'ancrage chimique d'un élément dans ou sur un substrat.

4. Utilisation d'une molécule hybride époxyde-acrylate selon la revendication 1 dans une composition de résine réactive multi-composants pour améliorer la stabilité en conditions basiques.

5. Mélange de résine époxy comprenant
(i) au moins une résine époxy durcissable, et
(ii) au moins une molécule hybride époxyde-acrylate selon la revendication 1.

6. Mélange de résine époxy selon la revendication 5, comprenant en outre un ou plusieurs diluants réactifs.

7. Mélange de résine époxy selon la revendication 5 ou 6, comprenant en outre un ou plusieurs additifs organiques.

8. Composant de résine époxy (A) comprenant un mélange de résine époxy selon l'une quelconque des revendications 5 à 7 et comprenant en outre des charges et des additifs inorganiques.

9. Composition de résine réactive multi-composants comprenant un composant de résine époxy (A) selon la revendication 8 et un composant (B) comprenant au moins un durcisseur.

10. Composition de résine réactive multi-composants selon la revendication 9, dans laquelle le composant (B) comprend en outre des charges et/ou des accélérateurs et/ou des épaississants.

11. Utilisation d'une composition de résine réactive multi-composants selon la revendication 9 ou 10 pour l'ancrage chimique, en particulier pour l'ancrage chimique d'un élément dans ou sur un substrat.
